# EUROPÄISCHE PATENTSCHRIFT

(11) **EP 3 309 003 B1**
(45) Veröffentlichungstag und Bekanntmachung des Hinweises auf die Patenterteilung: **24.03.2021**
(21) Anmeldenummer: 17194290.7
(22) Anmeldetag: 02.10.2017
(51) Int. Cl.: B60L 58/22, B60L 58/16, H02J 7/00, B60L 3/00

(54) **TRAKTIONSENERGIESPEICHERSYSTEM FÜR EIN FAHRZEUG**
TRACTION ENERGY STORAGE SYSTEM FOR A VEHICLE
SYSTÈME ACCUMULATEUR D'ÉNERGIE DE TRACTION POUR VÉHICULE

(30) Priorität: 13.10.2016 DE 102016012228
(43) Veröffentlichungstag der Anmeldung: 18.04.2018
(73) Patentinhaber: MAN Truck & Bus SE, 80995 München (DE)
(72) Erfinder: Kratzer, Sebastian, 80997 München (DE)
(74) Vertreter: v. Bezold & Partner Patentanwälte - PartG mbB

(56) Entgegenhaltungen:
- US-A1- 2009 027 009
- US-A1- 2011 127 963
- US-A1- 2012 217 806
- US-A1- 2016 218 528

## Beschreibung

Die Erfindung betrifft ein Traktionsenergiespeichersystem für ein Fahrzeug, insbesondere für ein Nutzfahrzeug.

Die zumindest teilweise Elektrifizierung des Antriebsstrangs eines Fahrzeugs ist kostenintensiv. Zu den Kosten tragen die Entwicklung und die Erprobung des Energiespeichers wesentlich bei. Durch die Zahl verschiedener Anwendungsfälle und den damit verbundenen Entwicklungs- und Erprobungsaufwand vervielfachen sich die Kosten. Die Zahl der Anwendungsfälle ist durch mehrere Faktoren bestimmt. Zum einen besteht oftmals der Wunsch, eine möglichst große Anzahl von Fahrzeugderivaten zu elektrifizieren. Zum anderen besteht bei jedem Fahrzeugderivat regelmäßig Bedarf nach unterschiedlichen Elektrifizierungsgraden, beispielsweise einem Batterie-Elektrofahrzeug (BEV), einem Plug-in-Hybridfahrzeug (PHEV) und einem Hybrid-Elektrofahrzeug (HEV).

Das Dokument DE 10 2010 002 939 A1 beschreibt einen herkömmlichen Energiespeicher. Der Energiespeicher umfasst eine Vielzahl einzelner Speicherzellen, wobei Gruppen von Speicherzellen jeweils zu einem Speichermodul und die Speichermodule zum Energiespeicher verschaltet sind.

Das Dokument US 2007/0080662 A1 beschreibt einen weiteren herkömmlichen Energiespeicher, der über die Leistungsverschaltung hinaus einen Datenbus aufweist. Der Datenbus verbindet Modulsteuerungen an den einzelnen Zellmodulen mit einer Steuerung des Energiespeichers.

Das Dokument DE 10 2007 038 532 A1 beschreibt einen als Batteriepack bezeichneten Energiespeicher mit mehreren miteinander verbundenen Zellen, die jeweils eine Spannung bereitstellen. Einer oder mehreren Zellen ist eine Überwachungsschaltung zugeordnet. Eine Kopplungsanordnung stellt auf Grundlage der Überwachungsschaltungen ein von den Zellen galvanisch getrenntes Zustandssignal bereit.

Aufgrund von fertigungstechnischen Toleranzen oder thermischen Einflüssen kann der Ladezustand der einzelnen Batteriezellen im Energiespeicher unterschiedlich sein.

Das Dokument US 2011/0127963 A1 beschreibt eine elektronische Steuerungseinheit einer Fahrzeugbatterie. Die Steuerungseinheit erfasst die Leerlaufspannungen mehrerer Zellen, die innerhalb der Fahrzeugbatterie in Gruppen unterteilt sind. Die Steuerungseinheit bestimmt die Gruppe, welche die Zelle mit dem höchsten Ladezustand aller Zellen der Fahrzeugbatterie umfasst und bewirkt deren Entladung. Hierzu wird ein Widerstand der Zelle parallel geschaltet.

Das Dokument US 2009/0027009 A1 beschreibt ein System zur Überwachung einer Vielzahl von Batterien für ein Elektrofahrzeug. Das System umfasst Überwachungseinheiten, die Spannung und Temperatur der Batterien erfassen und an einen Zentralkonten weiterleiten. Der Zentralknoten bestimmt einen Ausgleichsbedarf und steuert gegebenenfalls den Ausgleich der Batterien.

Das Dokument US 2012/0217806 A1 beschreibt einen Batteriestrang in Reihe geschalteter Batterien für eine unterbrechungsfreie Stromversorgung. Die Batteriestränge sind untereinander parallelgeschaltet.

Das Dokument US 2016/0218528 A1 beschreibt in Reihe geschaltete Leistungsspeichereinheiten, die jeweils mindestens eine Batterie umfassen. Parallel zu jeder Leistungsspeichereinheit ist eine Zellausgleichseinheit zuschaltbar. Durch diese Zellausgleichseinheit wird beim Laden der Ladestrom für die Leistungsspeichereinheit mit der höchsten Spannung reduziert.

Das Dokument DE 10 2013 204 888 A1 beschreibt eine Technik zum Ausgleich von Ladezuständen der Batteriezellen in einer Batterie. Nachdem ein Ladevorgang Ladezustände über 90% erreicht hat, werden abhängig von einer Ladezustandsdifferenz die Batteriezellen einzeln mit sogenannten Balancing-Widerständen beschaltet.

Das Dokument DE 10 2006 022 394 beschreibt eine Vorrichtung zum Ladungsabgleich einer Energiequelle mit mehreren Zellen. Aus mehreren Zellspannungen wird ein Referenzwert gebildet. Zellen werden entladen, wenn deren Zellspannung um mehr als eine vorgegeben Schwelle vom Referenzwert abweicht.

Wachsende Anforderungen an die gespeicherte Traktionsenergie, insbesondere für Nutzfahrzeuge, erfordern eine größere Anzahl an Zellen, so dass beispielsweise bei einem abgestellten Fahrzeug deren Ladezustände mit der Zeit auseinanderdriften. Divergierende Ladezustände stehen jedoch einem optimalen Betrieb entgegen, da bei der Inbetriebnahme komponentenschädigende Ströme entstehen oder zu hohe Spannungsdifferenzen die Inbetriebnahme sogar verhindern können.

Somit ist eine Aufgabe der Erfindung, eine Technik zur fahrzeugangepassten Speicherung von Traktionsenergie bereitzustellen, deren Nutzungsdauer nicht durch einzelne Zellen begrenzt wird. Eine weitere oder alternative Aufgabe der Erfindung ist, eine fahrzeugangepasste Speicherung von Traktionsenergie bereitzustellen, die eine gleichmäßige Nutzung vieler Zellen ermöglicht.

Diese Aufgabe oder Aufgaben werden durch ein Traktionsenergiespeichersystem für ein Fahrzeug mit den Merkmalen des Anspruchs 1 gelöst.

Gemäß einem Aspekt umfasst ein Traktionsenergiespeichersystem mehrere elektrische Energiespeicher. Jeder der Energiespeicher umfasst ein oder mehrere zusammengeschaltete Zellmodule und eine mit dem mindestens einen Zellmodul in Signalverbindung stehende Energiespeichersteuerung. Das mindestens eine Zellmodul umfasst jeweils mehrere zusammengeschaltete Speicherzellen und eine mit den Speicherzellen in Signalverbindung stehende Zellmodulsteuerung. Jede Zellmodulsteuerung ist dazu ausgebildet, Zellzustände der in Signalverbindung stehenden Speicherzellen zu erfassen und aufgrund der erfassten Zellzustände einen Modulzustand auszugeben. Jede Energiespeichersteuerung ist dazu ausgebildet, aufgrund des mindestens einen Modulzustands einen Speicherzustand zu bestimmen. Das Traktionsenergiespeichersystem umfasst ferner eine mit den Energiespeichersteuerungen in Signalverbindung stehende Systemsteuerung. Die Systemsteuerung ist dazu ausgebildet, abhängig von den Speicherzuständen eine Steueranweisung zum Angleichen der Zellzustände an die Energiespeichersteuerungen auszugeben. Die Energiespeichersteuerungen sind ferner dazu ausgebildet, die Zellmodulsteuerungen zum Angleichen der Zellzustände gemäß der Steueranweisung zu steuern.

Durch die von der Systemsteuerung ausgehende Steueranweisung zum Angleichen der Zellzustände können die Zellzustände der Speicherzellen in verschiedenen Energiespeichern angeglichen werden. Ein Auseinanderdriften von Zellzuständen, insbesondere zwischen Speicherzelle verschiedener Energiespeicher, kann verhindert oder kompensiert werden. Die Energiespeicher müssen für das Angleichen nicht zum Ladungsaustausch verbunden sein oder verbunden werden. Insbesondere kann die Technik eingesetzt werden, die Zellzustände anzugleichen, falls ein globales Umladen durch Verbinden der Energiespeicher unmöglich ist, beispielsweise aufgrund zu großer Spannungsdifferenzen zwischen den Energiespeichern. Beispielsweise kann die Technik im Vorfeld eines globalen Ladungsaustauschs zwischen einzelnen Energiespeichern eingesetzt werden.

Durch die Ausgabe der Steueranweisung und deren Umsetzung durch die Energiespeichersteuerungen kann ein globaler Zellzustand als optimale Ausgangslage für den Fahrzeugeinsatz und/oder das vollständige Aufladen aller Speicherzellen erreicht werden.

Das Erfassen der Zellzustände kann ein Messen der Zellzustände (beispielsweise durch die jeweiligen Speicherzellen), ein Bestimmen der Zellzustände (beispielsweise durch Berechnung mittels der Zellmodulsteuerung) und/oder ein Erhalten der Zellzustände (beispielsweise an der Zellmodulsteuerung) umfassen. Im Fall eines einzigen Zellmoduls in einem Energiespeicher kann die Funktionalität der Zellmodulsteuerung in der entsprechenden Energiespeichersteuerung integriert sein.

Jede der Energiespeichersteuerungen kann ferner dazu ausgebildet sein, das Angleichen der Zellzustände gemäß der Steueranweisung zu steuern, während die Energiespeicher voneinander getrennt sind. Die Energiespeicher können dazu ausgebildet sein, ohne einen Ladungsaustausch zwischen den Energiespeichern die Angleichung der Zellzustände umzusetzen. Die Energiespeicher können jeweils für alle ihre Speicherzellen einen einheitlichen Zellzustand autonom erreichen nach Maßgabe des von der Systemsteuerung in der Steueranweisung zentral vorgegebenen Zellzustands.

Jede Zellmodulsteuerung kann dazu ausgebildet sein, im Modulzustand die erfassten Zellzustände weiterzuleiten oder den Modulzustand aufgrund eines Minimums der erfassten Zellzustände zu bestimmen. Alternativ oder ergänzend kann jede Energiespeichersteuerung dazu ausgebildet sein, im Speicherzustand die erfassten Zellzustände weiterzuleiten oder aufgrund eines Minimums der Zellzustände oder eines Minimums des mindestens einen Modulzustands den Speicherzustand zu bestimmen. Die Energiespeichersteuerungen können jeweils das Minimum der Zellzustände bezogen auf den jeweiligen Energiespeicher bestimmen.

Die Steueranweisung kann einen Sollwert für den Zellzustand umfassen (der auch als ein Ziel-Zellzustand bezeichnet wird). Der Sollwert kann für alle Energiespeicher und/oder an alle Energiespeichersteuerungen vorgegeben werden. Der Sollwert kann eine einheitliche Spannung umfassen (die auch als eine Ziel-Zellspannung bezeichnet wird). Die Systemsteuerung kann ferner dazu ausgebildet sein, den Sollwert aufgrund eines Minimums oder Mittelwerts der Speicherzustände zu bestimmen.

Der Sollwert kann ein Parameter des Steuerns der Zellmodulsteuerungen zum Angleichen der Zellzustände sein. Jede Energiespeichersteuerung kann dem Steuern der mindestens einen Zellmodulsteuerung den Sollwert für den Zellzustand zugrunde legen. Jede Energiespeichersteuerung kann dazu ausgebildet sein, den Sollwert an die mindestens eine in Signalverbindung stehende Zellmodulsteuerung weiterzuleiten.

Jede Zellmodulsteuerung kann ferner dazu ausgebildet sein, die mit der jeweiligen Zellmodulsteuerung in Signalverbindung stehenden Speicherzellen bis zum Erreichen des Sollwerts zu entladen und/oder mit mindestens einer weiteren Speicherzelle desselben Zellmoduls zum Ladungsaustausch zu verschalten.

Die Energiespeichersteuerung kann das Entladen und/oder den Ladungsaustausch bewirken, beispielsweise in Reaktion auf die Steueranweisung der Systemsteuerung. Vorzugsweise bewirkt die Energiespeichersteuerung das Entladen und/oder den Ladungsaustausch nur in Reaktion auf die Steueranweisung der Systemsteuerung.

Jede der Speicherzellen kann einen Widerstand umfassen und dazu ausgebildet sein, auf Anweisung der in Signalverbindung stehenden Zellmodulsteuerung die jeweilige Speicherzelle mit dem Widerstand zu belasten und/oder den Widerstand von der Speicherzelle zu trennen. Der Widerstand wird auch als zuschaltbarer Entladewiderstand bezeichnet. Der Widerstand kann für eine von der Zellmodulsteuerung und/oder der Energiespeichersteuerung bestimmte Dauer die Speicherzelle belasten zum gezielten Entladen bis zum Erreichen des Sollwerts. Das Entladen kann periodisch unterbrochen werden, um den Zellzustand zu bestimmen. Die Zellmodulsteuerung kann das Entladen jeder Speicherzelle im Zellmodul steuern. Die Energiespeichersteuerung kann (beispielsweise mittels der Zellmodulsteuerungen) das Entladen jeder Speicherzelle im Energiespeicher steuern.

Alternativ oder ergänzend kann jede Speicherzelle eine Umladeschaltung umfassen und dazu ausgebildet sein, auf Anweisung der in Signalverbindung stehenden Zellmodulsteuerung die jeweilige Speicherzelle (in Verbindung mit einer oder mehreren anderen Speicherzellen desselben Energiespeichers oder desselben Zellmoduls) mittels der Umladeschaltung aufzuladen, zu entladen und/oder die Speicherzelle (von der einen oder mehreren anderen Speicherzellen) zu trennen. Die Umladeschaltung wird auch als zuschaltbare Umladeschaltung bezeichnet. Die Umladeschaltung kann für eine von der Zellmodulsteuerung und/oder der Energiespeichersteuerung bestimmte Dauer die Speicherzelle belasten zum gezielten Umladen bis zum Erreichen des Sollwerts. Das Umladen kann periodisch unterbrochen werden, um den Zellzustand zu bestimmen. Die Zellmodulsteuerung kann das Umladen jeder Speicherzelle im Zellmodul steuern. Die Energiespeichersteuerung kann (beispielsweise mittels der Zellmodulsteuerungen) das Umladen jeder Speicherzelle im Energiespeicher steuern.

Die Systemsteuerung kann ferner dazu ausgebildet sein, eine Abweichung zwischen den Speicherzustände zu bestimmen. Abhängig von der Abweichung kann die Steueranweisung zum Angleichen ausgeben werden.

Die Abweichung kann eine Varianz der Speicherzustände und/oder eine Differenz zwischen Minimum und Maximum der Speicherzustände umfassen. Die Steueranweisung kann ausgegeben werden, falls die Abweichung einen Schwellwert überschreitet.

Die Speicherzustände können auf Anfrage der Systemsteuerung bestimmt werden. Jede Energiespeichersteuerung kann ferner dazu ausgebildet sein, auf die Anfrage der Systemsteuerung den mindestens einen Modulzustand abzufragen.

Die Systemsteuerung kann ferner dazu ausgebildet sein, (beispielsweise periodisch) aus einem Ruhezustand in einen Angleichungszustand zu wechseln und im Angleichungszustand die Speicherzustände abzufragen und/oder die Steueranweisung auszugeben.

Der Ruhezustand der Systemsteuerung kann in Reaktion auf eine Unterbrechung der Zündung (oder einer entsprechenden Referenzspannung an einer Zündungsklemme) des Fahrzeugs bewirkt werden. Die Systemsteuerung kann in Reaktion auf die Unterbrechung der Zündung den Ruhezustand der Energiespeicher bewirken und (beispielsweise anschließend) selbst den Ruhezustand annehmen.

Jede Energiespeichersteuerung kann ferner dazu ausgebildet sein, auf die Anfrage der Systemsteuerung aus einem Ruhezustand in einen Angleichungszustand zu wechseln. Nach dem Steuern der mindestens einen Zellmodulsteuerung zum Angleichen der Zellzustände kann der Energiespeicher in einen Ruhezustand wechseln.

Zumindest einer der Zellzustände, der Modulzustände, der Speicherzustände und/oder der Sollwert können jeweils eine Leerlaufspannung (auch als "Open-Circuit Voltage" oder OCV bezeichnet) und/oder einen Ladezustand (auch als "State of Charge" oder SoC bezeichnet) angeben.

Jede Energiespeichersteuerung kann auf Basis der jeweiligen Zellzustände (beispielsweise Zellspannungen) einen Zell-Ladungszustand jeder Speicherzelle (beispielsweise durch Abgleich mit einer hinterlegten Kurve oder tabellierten Relation zwischen Leerlaufspannung und Ladezustand) bestimmen. Alternativ kann jede Zellmodulsteuerung die Zell-Ladezustände seiner Speicherzellen bestimmen und als Zellzustand ausgeben. Aus diesen Zell-Ladezuständen kann, z. B. durch Mittelwertbildung, ein Speicher-Ladezustand des jeweiligen Energiespeichers bestimmt werden (als der Speicherzustand). Jede Energiespeichersteuerung kann dazu ausgebildet sein, an die Systemsteuerung ein Minimum und/oder ein Maximum der Zellspannungen der Speicherzellen im jeweiligen Energiespeicher sowie den Speicher-Ladezustand auszugeben. Die Systemsteuerung kann dazu ausgebildet sein, aufgrund der Minima, Maxima und/oder Speicher-Ladezuständen eine Ziel-Zellspannung (beispielsweise eine globale minimale Zellspannung) als Grundlage für das Angleichen der Zellzustände zu bestimmen. Beispielsweise koordiniert die Systemsteuerung ein Angleichen der einzelnen Energiespeicher durch Vorgabe der Ziel-Zellspannung in der Steueranweisung. Die Energiespeichersteuerungen können jeweils dazu ausgebildet sein, die vorgegebene Ziel-Zellspannung umzusetzen, indem auf Basis jeder Einzelzellspannung eine Zeitdauer für das Angleichen (beispielsweise durch aktives Balancing) pro Zelle berechnet wird.

Die Zellzustände der Energiespeicher können angeglichen werden durch ein dissipatives Angleichen der Speicherzellen (auch als entladendes Balancing oder passives Balancing bezeichnet), durch ein Umladen zwischen Speicherzellen desselben Energiespeichers (auch als konservatives Angleichen, umladendes Balancing oder aktives Balancing bezeichnet) und/oder eine Kombination aus passivem und aktivem Balancing. Alternativ oder ergänzend können die Zellzustände der Energiespeicher angeglichen werden durch ein globales Umladen zwischen den Energiespeichern.

Jede einzelne Speicherzelle kann, beispielsweise mittels des zuschaltbaren Entladewiderstands und/oder der zuschaltbaren Umladeschaltung, auf die vorgegebene Ziel-Zellspannung geführt werden. Das Entladen und/oder das Umladen kann von den jeweiligen Energiespeichersteuerungen und/oder den jeweiligen Zellmodulsteuerungen gesteuert werden.

Die Systemsteuerung kann ferner dazu ausgebildet sein, Fahrzeuganweisungen vom Fahrzeug zu erhalten. Eine Einschaltanweisung kann einen Betriebszustand bewirken. Eine Abschaltanweisung kann den Ruhezustand oder den Angleichungszustand bewirken.

Das Fahrzeug kann ein Landfahrzeug, ein Wasserfahrzeug (beispielsweise ein Schiff oder Unterseeboot) oder ein Luftfahrzeug sein. Alternativ oder in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Die Zellmodule können in jedem Energiespeicher über Stromschienen elektrisch verbundene sein. Jeder Energiespeicher kann mindestens ein Schaltschütz umfassen. Die Energiespeichersteuerung kann das Schaltschütz oder die Schaltschütze steuern. In jedem Energiespeicher kann das Schaltschütz oder können die Schaltschütze dazu ausgebildet sein, die Stromschienen des Energiespeichers mit einer Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Beispielsweise können zwei Schaltschütze jeweils einen Pol der Stromschienen mit der Energiespeicherhochvoltschnittstelle verbinden und trennen.

Die Energiespeicherhochvoltschnittstellen (einzelner Energiespeicher oder in Clustern seriell geschalteter Energiespeicher) können im Traktionsenergiespeichersystem parallel geschaltet sein. Die Systemsteuerung kann dazu ausgebildet sein, die Schließstellung der Schaltschütze aller Energiespeicher im Betriebszustand des Traktionsenergiespeichersystems zu bewirken, die Schließstellung der Schaltschütze von mindestens zwei der Energiespeicher im Angleichungszustand des Traktionsenergiespeichersystems zu bewirken und die Offenstellung der Schaltschütze aller Energiespeicher im Ruhezustand des Traktionsenergiespeichersystems zu bewirken.

Durch die geschlossenen Schaltschütze können im Angleichungszustand die mindestens zwei Energiespeicher über ihre parallel geschalteten Energiespeicherhochvoltschnittstellen zum Ladungsaustausch (globales Umladen) verbunden werden. Eine im Betriebszustand oder Ruhezustand entstandene Ungleichheit der Speicherzustände kann ausgeglichen werden. Die Speicherzustände der mindestens zwei Energiespeicher können vor dem Ruhezustand und/oder in Vorbereitung des nächsten Betriebszustands ausgeglichen werden.

Die Systemsteuerung kann das Entladen einzelner Speicherzellen (passives Balancing), das Umladen einzelner Speicherzellen innerhalb jedes Energiespeichers (aktives Balancing) und/oder den Ladungsaustausch zwischen den Energiespeichern (globales Umladen) steuern. Beispielsweise können unterschiedliche Speicherzustände durch den Ladungsaustausch (oder aktives Balancing) angeglichen werden und unterschiedliche Modulzustände oder Zellzustände können durch Entladen (oder passives Balancing) angeglichen werden. Das aktive Balancing kann dem passiven Balancing (z. B. unmittelbar) vorausgehen.

In einer Variante steuert die Systemsteuerung in einem ersten Schritt einen Ladungsaustausch innerhalb der Energiespeicher und in einem zweiten Schritt einen Ladungsaustausch zwischen den Energiespeichern.

Die Entladung (dissipatives Angleichen) oder der Ladungsaustausch (konservatives Angleichen) im Angleichungszustand kann unterschiedliche Speicherzustände, die beispielsweise mit der wachsenden Anzahl an Zellmodulen einer Streuungen unterliegen, zur Verlängerung der Nutzungsdauer des gesamten Traktionsenergiespeichersystem angleichen. So können herstellungsbedingte Unterschiede hinsichtlich Entladekurve, Innenwiderstand oder Relaxationszeit kompensiert werden.

Ferner können die Energiespeicher jeweils zum internen Ladungsaustausch zwischen den Zellmodulen des jeweiligen Energiespeichers ausgebildet sein, beispielsweise über die Stromschienen und/oder gesteuert durch die Energiespeichersteuerungen und Zellmodulsteuerungen. Die Zellmodule innerhalb jedes Energiespeichers können in Reihe oder parallel geschaltet sein.

Um die Schließstellung im Angleichungszustand zu bewirken, können die Schaltschütze der mindestens zwei Energiespeicher geschlossen werden oder (beispielsweise vom Betriebszustand kommend) geschlossen bleiben. Die mindestens zwei Energiespeicher können eine erste (z. B. echte) Teilmenge aller Energiespeicher sein. Die erste Teilmenge kann eine gerade Anzahl an Energiespeichern umfassen. Die Energiespeicher können paarweise zum Ladungsaustausch durch die Schließstellung ihrer Schaltschütze verbunden sein.

Die Schaltschütze einer zweiten (z. B. zur ersten Teilmenge komplementären) Teilmenge aller Energiespeicher kann im Angleichungszustand geöffnet werden. Die Schaltschütze der zweiten Teilmenge können während des gesamten Angleichungszustands und/oder im Ruhezustand in der Offenstellung sein.

Der Angleichungszustand kann sich an den Betriebszustand anschließen. Der Ruhezustand kann sich an den Angleichungszustand anschließen. Die Systemsteuerung kann zum Steuern der Energiespeichersteuerungen ausgebildet sein. Die Systemsteuerung kann dazu ausgebildet sein, die Offenstellung und die Schließstellung der Schaltschütze mittels der jeweiligen Energiespeichersteuerung zu bewirken. Die Systemsteuerung kann ferner dazu ausgebildet sein, im Angleichungszustand die Energiespeichersteuerungen der Energiespeicher der zweiten Teilmenge und/oder im Ruhezustand alle Energiespeichersteuerungen in einen Ruhezustand zu versetzen.

Das Schaltschütz kann dazu ausgebildet sein, die Energiespeicherhochvoltschnittstelle des Energiespeichers in der Schließstellung mit den untereinander verschalteten Zellmodulen zu verbinden und in der Offenstellung von diesen zu trennen. Die Stromschienen jedes Energiespeichers können jeweils eine Minusschiene und eine gegenüber der Minusschiene potentialhöhere Plusschiene umfassen. Die Energiespeicherhochvoltschnittstellen können jeweils einen Minuspol und einen Pluspol umfassen. Die Stromschienen können in der Schließstellung mit der Energiespeicherhochvoltschnittstelle verbunden sein, indem die Plusschiene und die Minusschiene mit dem Pluspol bzw. dem Minuspol verbunden sind. Die Stromschienen können in der Offenstellung von der Energiespeicherhochvoltschnittstelle getrennt sein, indem die Plusschiene vom Pluspol getrennt ist, beispielsweise bei mit dem Minuspol verbundener Minusschiene.

Die Energiespeicherhochvoltschnittstellen können außerhalb der Energiespeicher und/oder innerhalb des Traktionsenergiespeichersystems parallel geschaltet sein, beispielsweise durch eine Verkabelung der Energiespeicher des Traktionsenergiespeichersystems. Die Parallelschaltung der Energiespeicherhochvoltschnittstellen kann in allen Zuständen (beispielsweise im Betriebszustand, im Angleichungszustand und/oder im Ruhezustand) des Traktionsenergiespeichersystems bestehen.

Die parallel geschalteten Energiespeicherhochvoltschnittstellen können ferner zum Energieaustausch mit dem Fahrzeug verbunden sein. Ein Leistungsnetz (beispielsweise eine Hochvoltverteilungseinheit) des Fahrzeugs kann mit den parallel geschalteten Energiespeicherhochvoltschnittstellen verbunden sein. Der Energieaustausch kann auf den Betriebszustand beschränkt sein. Ein Stromfluss zwischen Traktionsenergiespeichersystem und dem Fahrzeug (beispielsweise einem Umwandler oder Inverter des Fahrzeugs) kann im Angleichungszustand und/oder im Ruhezustand unterbrochen sein. Das Leistungsnetz (beispielsweise die Hochvoltverteilungseinheit) des Fahrzeugs und/oder ein Systemschaltschütz des TES-Systems kann den Stromfluss im Angleichungszustand und/oder im Ruhezustand unterbrechen.

Alternativ oder ergänzend können die Energiespeicherhochvoltschnittstellen ausschließlich zum Ladungsaustausch zwischen den Energiespeichern im Angleichungszustand ausgebildet sein. In diesem Fall kann jeder Energiespeicher eine weitere Energiespeicherhochvoltschnittstelle umfassen, die (vorzugsweise ausschließlich) zum Energieaustausch mit dem Fahrzeug ausgebildet ist. Auch diese weiteren Energiespeicherhochvoltschnittstellen können parallel geschaltet sein, beispielsweise durch eine Verkabelung der Energiespeicher des Traktionsenergiespeichersystems.

Die Systemsteuerung kann ferner dazu ausgebildet sein, Signale von den Energiespeichersteuerungen zu erhalten. Die Signale können jeweils den Speicherzustand des jeweiligen Energiespeichers angeben.

Die Speicherzustände können für eine Obermenge der mindestens zwei Energiespeicher (d. h. eine Obermenge der ersten Teilmenge) erhalten werden. Beispielsweise kann von allen Energiespeichern jeweils ein Speicherzustand erhalten werden.

Die Systemsteuerung kann ferner dazu ausgebildet sein, im Angleichungszustand oder für eine Messphase des Angleichungszustands die Offenstellung der Schaltschütze der Energiespeicher zu bewirken. Die Messphase kann ein Zeitintervall (z. B. direkt am Anfang des Angleichungszustands) oder mehrere Zeitintervalle im Angleichungszustand umfassen. Die jeweilige Energiespeichersteuerung kann eine Leerlaufspannung (z. B. an den lastfreien Stromschienen) erfassen. Die erhaltenen Speicherzustände können auf einer in der Messphase gemessenen Leerlaufspannung des jeweiligen Energiespeichers basieren.

Die Offenstellung der Schaltschütze in der Messphase kann für die Energiespeicher der Obermenge bewirkt werden. Beispielsweise können alle Energiespeicher gemessen werden. Die Energiespeicher können zeitgleich (beispielsweise in einem Zeitintervall) oder sequentiell (beispielsweise in den mehren Zeitintervallen) gemessen werden. Die Offenstellung kann für die Dauer der Messphase bewirkt sein.

Der Speicherzustand kann den Ladezustand und/oder die Leerlaufspannung des jeweiligen Energiespeichers angeben. Alternativ oder ergänzend kann der Speicherzustand von einem zeitlichen Relaxationsverlauf der Leerlaufspannung (beispielsweise während der Messphase) abhängen. Alternativ oder ergänzend kann der Speicherzustand von einer Temperatur und/oder einer zeitlich integrierten Stromentnahme abhängen.

Der Bedarf (und damit die erste Teilmenge) kann für jene Energiespeicher festgestellt werden, deren Speicherzustand (z. B. signifikant) von einem durchschnittlichen Speicherzustand aller Energiespeicher abweicht. Die Abweichung kann durch eine prozentuale Abweichung des Speicherzustands und/oder eine Perzentile einer Verteilung der erhaltenen Speicherzustände bestimmt sein.

Die Systemsteuerung kann dazu ausgebildet sein, den Zellzustand regelmäßig (z. B. periodisch) zu überwachen. Die Systemsteuerung kann ferner dazu ausgebildet sein, die Offenstellung der Schaltschütze der mindestens zwei Energiespeicher zu bewirken, wenn einer der überwachten Speicherzustände fehlerhafter ist und/oder der überwachte Stromfluss größer als ein vorgegebener Maximalstrom ist.

Die Systemsteuerung kann dazu ausgebildet sein, den Angleichungszustand zu beendet und/oder den Ruhezustand des Traktionsenergiespeichersystems zu beginnen, wenn eine vorgegebene Differenz der Zellzustände unterschritten ist und/oder eine vorgegebene Zeitdauer im Angleichungszustand vergangen ist.

Die Systemsteuerung kann ferner dazu ausgebildet sein, Fahrzeuganweisungen (z. B. eine Datenabfrage oder eine Steuerungsanweisungen) vom Fahrzeug zu erhalten. Der Erhalt einer Einschaltanweisung kann den Betriebszustand einleiten. Der Erhalt einer Abschaltanweisung kann den Angleichungszustand einleiten. Beispielsweise kann der Erhalt der Abschaltanweisung die Offenstellung der Schaltschütze aller Energiespeicher und/oder den Beginn der Messphase innerhalb des Angleichungszustands bewirken.

Das Traktionsenergiespeichersystem kann ferner eine Systemhochvoltschnittstelle und/oder ein Systemschaltschütz umfassen. Die Systemhochvoltschnittstelle ist mit dem Fahrzeug elektrisch verbunden oder verbindbar, beispielsweise mit einem Antriebsstrang des Fahrzeugs. Das Systemschaltschütz ist dazu ausgebildet, die parallel geschalteten Energiespeicherhochvoltschnittstellen mit der Systemhochvoltschnittstelle nach Vorgabe der Systemsteuerung (in einer Schließstellung des Systemschaltschützes) zu verbinden und (in einer Offenstellung des Systemschaltschützes) zu trennen. Die Systemsteuerung kann die Schließstellung des Systemschaltschützes im Betriebszustand und/oder die Offenstellung des Systemschaltschützes im Angleichungszustand bewirken. Die Systemsteuerung kann ferner dazu ausgebildet sein, im Ruhezustand die Offenstellung des Systemschaltschützes zu bewirken.

Jede der Zellmodulsteuerungen kann dazu ausgebildet sein, die Speicherzellen im jeweiligen Zellmodul betreffende Messwerte auszugeben. Jede der Energiespeichersteuerungen kann dazu ausgebildet sein, die Messwerte von den Zellmodulen im jeweiligen Energiespeicher zu erhalten und abhängig von den erhaltenen Messwerten ein Signal zu erzeugen. Die Systemsteuerung kann dazu ausgebildet sein, die Signale von den Energiespeichersteuerungen zu erhalten. Das Signal der Energiespeichersteuerung kann den jeweiligen Speicherzustand angeben, beispielsweise im Angleichungszustand.

Eine der Energiespeichersteuerungen kann die Funktion der Systemsteuerung ausführen. Diese eine Energiespeichersteuerung kann auch als Master-Energiespeichersteuerung bezeichnet werden. Jede weitere Energiespeichersteuerung des Traktionsenergiespeichersystems kann auch als Slave-Energiespeichersteuerung bezeichnet werden.

Die Funktion der Systemsteuerung kann in jeder der Energiespeichersteuerungen implementiert sein und in einer der Energiespeichersteuerungen zur Ausführung aktiviert sein. Die Funktion der Systemsteuerung kann in nur einer der Energiespeichersteuerungen zur Ausführung aktiviert sein. In allen anderen Energiespeichersteuerungen kann die Funktion der Systemsteuerung deaktiviert sein. Jede der Energiespeichersteuerungen kann dazu ausgebildet sein, in einem ersten Energiespeicherbetriebszustand die Funktion auszuführen und in einem zweiten Energiespeicherbetriebszustand die Funktion nicht auszuführen.

Jeder der Energiespeicher kann ferner eine erste Datenschnittstelle und eine von der ersten Datenschnittstelle verschiedene zweite Datenschnittstelle umfassen. Die Datenschnittstellen können jeweils innerhalb des Energiespeichers mit der Energiespeichersteuerung verbunden sein.

Bei jenen Energiespeichern, welche nicht die Funktion der Systemsteuerung ausführen, kann die erste Datenschnittstelle außerhalb des Energiespeichers unverbunden sein oder entfallen. Alternativ oder ergänzend kann bei jenen Energiespeichern die zweite Datenschnittstelle zur Ausgabe des Signals mit der zweiten Datenschnittstelle des Energiespeichers verbunden sein, welcher die Funktion der Systemsteuerung ausführt.

Bei jenem Energiespeicher, welcher die Funktion der Systemsteuerung ausführt, kann die erste Datenschnittstelle außerhalb des Energiespeichers mit dem Fahrzeug verbunden sein zur Ausgabe eines Systemsignals. Alternativ oder ergänzend kann die zweite Datenschnittstelle jenes Energiespeichers zum Erhalt der Signale mit den zweiten Datenschnittstellen der Energiespeicher verbunden sein, welche nicht die Funktion der Systemsteuerung ausführen. Die zweiten Datenschnittstellen aller Energiespeicher können an einen gemeinsamen Datenbus angeschlossen sein.

Die Systemsteuerung kann dazu ausgebildet sein, den Angleichungszustand (beispielsweise Beginn und/oder Ende des Angleichungszustands) als das Systemsignal auszugeben. Alternativ oder ergänzend kann die Systemsteuerung dazu ausgebildet sein, die erhaltenen Signale zum Systemsignal zu aggregieren und das aggregierte Systemsignal auszugeben, z. B. im Betriebszustand des Traktionsenergiespeichersystems.

Die Aggregation der mehreren Signale zu einem Systemsignal durch die Systemsteuerung kann eine einheitliche Signalausgabe (oder Kommunikation) gegenüber dem Fahrzeug ermöglichen. Beispielsweise können verschiedene Fahrzeugderivate und/oder Fahrzeuge mit unterschiedlichen Elektrifizierungsgraden des Antriebsstrangs eine einheitliche Kommunikationsschnittstelle zum Traktionsenergiespeichersystem nutzen.

Ein Aufbau der fahrzeugseitigen Kommunikationsschnittstelle und ein Protokoll der fahrzeugseitigen Kommunikation des Traktionsenergiespeichersystems können für verschiedenen Anwendungsfällen gleich sein. Die Anwendungsfälle können sich hinsichtlich Anzahl und Verschaltung der Energiespeicher unterscheiden. Die Anzahl und die Verschaltung der Energiespeicher kann an einen Energie- und Leistungsbedarf des Fahrzeugs angepasst werden, ohne die fahrzeugseitige Kommunikation anzupassen.

Das hierarchisch strukturierte Traktionsenergiespeichersystem mit Energiespeichern auf einer Hierarchieebene und Zellmodulen auf einer darunterliegenden Hierarchieebene kann einen Ladungsaustausch ermöglichen, dessen Zeitdauer nicht oder nicht linear mit der Anzahl der Speicherzellen oder der Zellmodule zunimmt. Beispielsweise kann jede Energiespeichersteuerung dazu ausgebildet sein, auf Grundlage der von den Zellmodulsteuerungen erhaltenen Messwerte einen ersten Ladungsaustausch zwischen den Speicherzellen und/oder den Zellmodulen zu bewirken. Nach Abschluss des ersten Ladungsaustauschs kann die Systemsteuerung einen zweiten Ladungsausgleich zwischen den Energiespeichern im Angleichungszustand bewirken. Ferner kann der hierarchische Aufbau die Wartung und/oder die Reparatur vereinfachen. Beispielsweise kann das Systemsignal eine Meldung enthalten. Die Meldung kann eine Fehlermeldung, Warnmeldung oder Diagnosemeldung sein.

Die Diagnosemeldung kann aufgrund der von den einzelnen Energiespeichern erhaltenen Signale einen einzelnen Energiespeicher angeben. Beispielsweise kann einer der Energiespeicher als fehlerhaften oder gealtert angegeben sein. Ferner kann die Diagnosemeldung aufgrund zellmodul-spezifischer Messwerte ein einzelnes Zellmodul (beispielsweise als fehlerhaft oder gealtert) angeben. Dies ist vorteilhaft, falls eine nutzbare Leistung des Traktionsenergiespeichersystems vom leistungsschwächsten Energiespeicher oder Zellmodul abhängt. Durch einen gezielten Austausch des angegebenen Energiespeichers oder Zellmoduls kann die Leistungsfähigkeit des Traktionsenergiespeichersystem zeit- und kosteneffektiv wiederhergestellt werden.

Die Energiespeichersteuerung jedes Energiespeichers kann mit den jeweiligen Zellmodulsteuerungen desselben Energiespeichers zum Datenaustausch verbunden sein, beispielsweise über einen seriellen Datenbus. Die Messwerte können eine Spannung (z. B., eine Modulspannung aller Speicherzellen) und/oder eine Temperatur (z. B. eine Modultemperatur, einen Temperaturmittelwert oder ein Temperaturmaximum) der Zellmodule angeben.

Jede Zellmodulsteuerung kann dazu ausgebildet sein, die Messwerte zu erfassen und/oder an die jeweils verbundene Energiespeichersteuerung auszugeben. Die Zellmodulsteuerung kann an zumindest einer der jeweiligen Speicherzellen angrenzend oder anliegend angeordnet sein. Sensoren zur Erfassung der Messwerte können in der Zellmodulsteuerung angeordnet sein.

Jede Energiespeichersteuerung kann dazu ausgebildet sein, auf Grundlage der von den jeweiligen Zellmodulen erhaltenen Messwerte, das Signal zu erzeugen. Alternativ oder ergänzend kann die Energiespeichersteuerung dazu ausgebildet sein, weitere Messwerte zu erfassen (z. B. die Leerlaufspannung des Energiespeichers oder einen vom Energiespeicher abgegebenen Strom), und auf deren Grundlage das Signal (z. B. zur Angabe des Speicherzustands) zu erzeugen.

Die Signale und/oder das Systemsignal können einen Messwert, einen Zustandswert oder einen Diagnosewert angeben. Das Aggregieren der Signale zum Systemsignal kann eine Mittelwertbildung, eine Minimumbestimmung und/oder eine Maximumbestimmung umfassen.

Die Systemsteuerung kann zur bidirektionalen Kommunikation mit dem Fahrzeug ausgebildet sein. Die Systemsteuerung kann dazu ausgebildet sein, ein Fahrzeugsignal zu erhalten. Die Systemsteuerung kann das Fahrzeugsignal analysieren und abhängig von der Analyse ein Steuersignal an mindestens eine der Energiespeichersteuerungen ausgeben. Das Fahrzeugsignal kann eine Steuerungsanweisung (z. B. die Fahrzeuganweisung) und/oder eine Zustandsabfrage umfassen.

Die Systemsteuerung kann dazu ausgebildet sein, über die erste Datenschnittstelle ein Notabschaltsignal vom Fahrzeug zu erhalten. Die Systemsteuerung kann ferner dazu ausgebildet sein, beim Erhalt des Notabschaltsignals ein Steuersignal zur Trennung der Schaltschütze an die Energiespeichersteuerungen zu senden.

Die Signale können den Speicherzustand des jeweiligen Energiespeichers angeben (der auch als Energiespeicherzustand bezeichnet werden kann). Das aggregierte Systemsignal kann einen Systemzustand des Traktionsenergiespeichersystems angeben. Ein Datenformat zur Angabe des Zustands, eine physikalische Definition der jeweils genutzten Datenschnittstelle und/oder ein Kommunikationsprotokoll kann für die Signale und das aggregierte Systemsignal übereinstimmend sein.

Der Speicherzustand und der Systemzustand können einen gegenwärtigen Zustand des jeweiligen Energiespeichers bzw. des Traktionsenergiespeichersystems angeben. Alternativ oder ergänzend kann der Speicherzustand und der Systemzustand eine (z. B. prognostizierte) Leistungsfähigkeit des jeweiligen Energiespeichers bzw. des Traktionsenergiespeichersystems angeben. Die Signale der Energiespeichersteuerungen können einen gegenwärtigen Ladezustand und/oder einen (z. B. zukünftig entnehmbaren) Maximalstrom des jeweiligen Energiespeichers angeben. Der Ladezustand kann, beispielsweise mittels einer tabellierten Ladekurve, aus der gemessenen Spannung (z. B. der Leerlaufspannung) bestimmt werden. Der entnehmbare Maximalstrom kann, beispielsweise mittels einer tabellierten Funktion, aus dem Ladezustand und/oder der gemessenen Temperatur bestimmt werden. Jede die Funktion der Systemsteuerung nicht ausführende Energiespeichersteuerung kann ein eigenes Signal (z. B. mit einem eigenen Datensatz und/oder mittels eines eigenen Datagramms) an die die Funktion der Systemsteuerung ausführende Energiespeichersteuerung ausgeben.

Die Energiespeichersteuerungen können jeweils dazu ausgebildet sein, den Speicherzustand des jeweiligen Energiespeichers festzustellen auf Grundlage der von den Zellmodulen erhaltenen Messwerte und/oder den weiteren Messwerten. Die Energiespeichersteuerung kann ferner dazu ausgebildet sein, bei Feststellung eines unzulässigen Speicherzustands das jeweilige Schaltschütz oder die jeweiligen Schaltschütze zu trennen und/oder eine Fehlermeldung als das Signal zu erzeugen und an die Systemsteuerung auszugeben. Das Signal der betreffenden Energiespeichersteuerung kann den unzulässigen Speicherzustand benennen und/oder die Unzulässigkeit als solche angeben.

Die Feststellung des Speicherzustands kann ein Messen des durch den jeweiligen Energiespeicher abgegebenen Stroms umfassen. Der unzulässige Speicherzustand kann bei Überschreiten des entnehmbaren Maximalstroms festgestellt werden. Alternativ oder ergänzend können die Signale jeweils den entnehmbaren Maximalstrom des jeweiligen Energiespeichers angeben. Das aggregierte Systemsignal kann das *n*-Fache des Kleinsten der signalisierten entnehmbaren Maximalströme angeben. Der Faktor *n* kann die Anzahl der Energiespeicher sein, optional nach Abzug der Zahl jener Energiespeicher, für die ein unzulässiger Speicherzustand festgestellt oder signalisiert ist.

Die Feststellung des Zustands kann ein Bestimmen des Ladezustands des jeweiligen Energiespeichers oder einer dem jeweiligen Energiespeicher entnehmbaren Ladung umfassen. Der unzulässige Speicherzustand kann bei Unterschreiten einer Mindestladung festgestellt werden. Die erzeugten Signale können jeweils den Ladezustand oder die entnehmbare Ladung des jeweiligen Energiespeichers angeben. Der Systemzustand kann die Summe der signalisierten entnehmbaren Ladungen angeben.

Die entnehmbare Ladung kann durch zeitliche Integration des Stroms bestimmt werden. Alternativ oder ergänzend kann die entnehmbare Ladung aufgrund der gemessenen Spannung mittels einer tabellierten Funktion bestimmt werden.

Jeder Energiespeicher kann einen Schutzleiterkontakt umfassen. Der Schutzleiterkontakt kann mit einer Karosserie des Fahrzeugs verbunden oder verbindbar sein. Die Feststellung des Zustands kann ein Messen des Isolationswiderstands zwischen einem Pol (oder beiden Polen) der Energiespeicherhochvoltschnittstelle und dem Schutzleiterkontakt des jeweiligen Energiespeichers umfassen. Der unzulässige Speicherzustand kann bei Unterschreiten eines Isolationswiderstandswerts festgestellt werden.

Jeder der Energiespeicher kann in einem eigenen Gehäuse angeordnet sein. In einer oder mehreren Außenflächen des Gehäuses kann mindestens eines der folgenden Merkmale angeordnet sein: die erste Datenschnittstelle, die zweite Datenschnittstelle, die Energiespeicherhochvoltschnittstelle und der Schutzleiterkontakt.

Gemäß weiteren Aspekten sind ein Fahrzeug, beispielsweise ein Nutzfahrzeug, mit einem solchen Traktionsenergiespeichersystem und ein Verfahren zur Herstellung eines Fahrzeugs mit dem Einbau eines solchen Traktionsenergiespeichersystems bereitgestellt.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines ersten Ausführungsbeispiels eines Traktionsenergiespeichersystems für ein Fahrzeug;
- Figur 2: ein schematisches Blockschaltbild eines zweiten Ausführungsbeispiels eines Traktionsenergiespeichersystems für ein Fahrzeug;
- Figur 3: ein schematisches Blockschaltbild eines dritten Ausführungsbeispiels eines Traktionsenergiespeichersystems für ein Fahrzeug;
- Figur 4: ein funktionales Blockdiagramm einer beispielhaften Signalverarbeitung im Traktionsenergiespeichersystem, die in den Ausführungsbeispielen der Figuren 1 bis 3 implementierbar ist;
- Figur 5: ein Ablaufdiagramm eines Verfahrens zum Angleichen von Zell-, Modul- oder Speicherzuständen in einem Traktionsenergiespeichersystem für ein Fahrzeug; und
- Figur 6: ein funktionales Blockdiagramm einer beispielhaften Implementierung eines Angleichungszustands in den Ausführungsbeispielen der Figuren 1 bis 4.

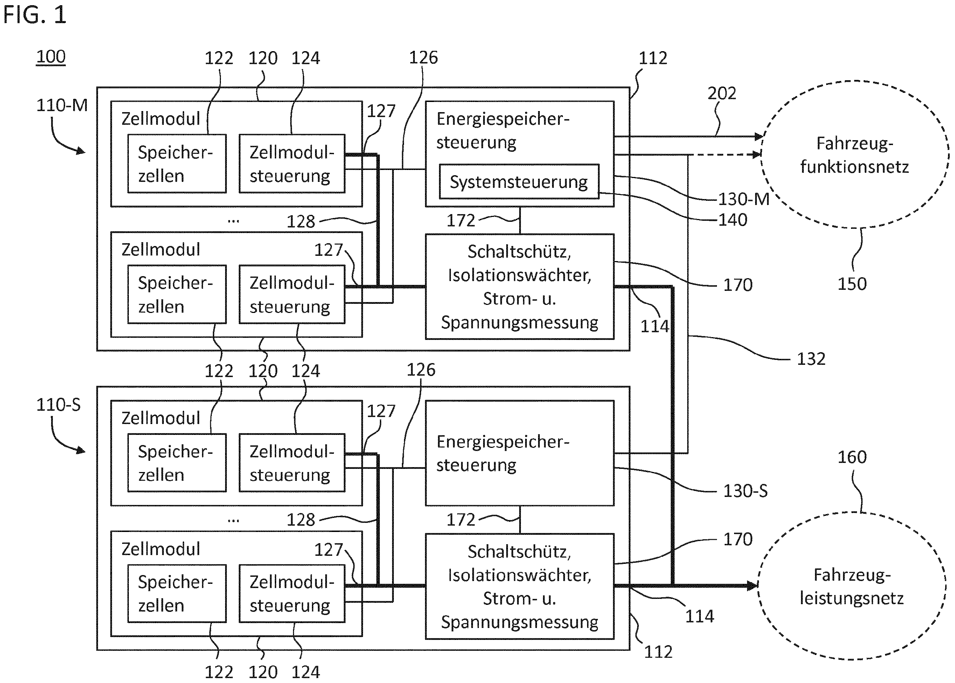

Figur 1 zeigt ein schematisches Blockschaltbild eines allgemein mit Bezugszeichen 100 bezeichneten Traktionsenergiespeichersystems (TES-Systems) für ein Fahrzeug, beispielsweise ein Nutzfahrzeug. Das TES-System 100 umfasst mindestens zwei Energiespeicher 110. Jeder Energiespeicher 110 umfasst jeweils mehrere Zellmodule 120 und eine Energiespeichersteuerung 130.

Jedes der Zellmodule 120 umfasst mehrere Speicherzellen 122 und eine Zellmodulsteuerung 124. Jede Zellmodulsteuerung 124 erfasst Messwerte betreffend die jeweils zugeordneten Speicherzellen 122. Zum Beispiel erfasst die Zellmodulsteuerung 124 eine Spannung und/oder eine Temperatur der Speicherzellen 122 im jeweiligen Zellmodul 120. Jede der Zellmodulsteuerungen 124 ist dazu ausgebildet, die Messwerte auf einem internen Datenbus 126 auszugeben. Der interne Datenbus 126 des Zellmoduls 120 kann ein serieller Bus, beispielsweise für ein Controller Area Network (CAN), sein.

Jede der Energiespeichersteuerungen 130 ist dazu ausgebildet, die Messwerte von den Zellmodulen 120 im jeweiligen Energiespeicher 110 zu erhalten. Hierzu ist jede Energiespeichersteuerung 110 mit dem jeweiligen internen Datenbus 126 verbunden.

Jede der Energiespeichersteuerungen 130 ist ferner dazu ausgebildet, abhängig von den erhaltenen Messwerten ein Signal zu erzeugen. Zur Ausgabe des Signals oder anderer Signale ist die Energiespeichersteuerung 130 mit einem externen Datenbus 132 verbunden. Der externe Datenbus 132 des TES-Systems 100 kann ein serieller Bus sein, beispielsweise ein weiterer CAN-Bus. Der externen Datenbus 132 kann ausschließlich zur Kommunikation zwischen den Energiespeichern 110 (bzw. deren Energiespeichersteuerungen 130) ausgebildet sein.

Die Energiespeicher 110 sind jeweils in einem eigenen Gehäuse 112 angeordnet. Der interne Datenbus 126 verläuft innerhalb des jeweiligen Gehäuses 112. Der externe Datenbus 132 verläuft außerhalb der Gehäuse 112.

Das TES-System 100 umfasst ferner eine Systemsteuerung 140, die dazu ausgebildet ist, Signale von den Energiespeichersteuerungen 130 zu erhalten, auf Grundlage der erhaltenen Signale ein Systemsignal zu erzeugen und das Systemsignal an ein Funktionsnetz 150 des Fahrzeugs auszugeben. Das Funktionsnetz 150 kann ein Niederspannungsbordnetz und/oder ein Bussystem zur Kommunikation zwischen Fahrzeugfunktionen umfassen. Das Niederspannungsbordnetz kann eine Versorgungsspannung von 24 Volt bereitstellen.

In einer ersten Variante kann der externen Datenbus 132 ausschließlich zur Kommunikation zwischen den Energiespeichern 110 (bzw. deren Energiespeichersteuerungen 130) ausgebildet sein. Das Funktionsnetz 150 kann über eine eigene Schnittstelle und/oder eine eigene Busanbindung 202 mit der Systemsteuerung 140 verbunden sein. Hierzu kann ein eigener Bus (beispielsweise ein eigener CAN-Bus) zur Fahrzeugkommunikation vorgesehen sein, der unabhängig vom externen Datenbus 132 arbeitet.

In einer zweiten Variante kann der externe Datenbus 132 (anstelle der separaten Busanbindung 202 oder ergänzend hierzu) mit dem Funktionsnetz 150 verbunden sein (gestrichelter Pfeil).

In beiden Varianten kann das TES-System 100 eine einheitliche Fahrzeugschnittstelle zum Funktionsnetz 150 des Fahrzeugs umfassen, die unabhängig von der Anzahl der eingesetzten und miteinander verbundenen Energiespeicher 110 ist. Insbesondere bei der ersten Variante kann die Fahrzeugschnittstelle auf eine physischen Ebene (z. B. hinsichtlich Steckverbindung und/oder Signalverlauf) oder einer Bitübertragungsschicht (z. B. hinsichtlich eines Kommunikationsprotokolls) unabhängig von einer veränderlichen Zusammensetzung der vom TES-System 100 umfassten Energiespeicher 110 sein.

Die Systemsteuerung 140 kann in einem Energiespeicher 110, beispielsweise in einer der Energiespeichersteuerungen 130, implementiert sein. Alternativ oder ergänzend kann die Systemsteuerung 140 außerhalb der Energiespeicher 110 implementiert sein, beispielsweise als eine eigene Vorrichtung in einem separaten Gehäuse oder eine Komponente des Funktionsnetzes 150. Ein Energiespeicher 110, welcher die Funktion der Systemsteuerung 140 ausführt, wird auch als Master-Energiespeicher 110-M bezeichnet. Der oder die Energiespeicher 110, welche nicht die Funktion der Systemsteuerung 140 ausführen, werden auch als Slave-Energiespeicher 110-S bezeichnet. Entsprechende Bezeichnungen gelten für die jeweiligen Energiespeichersteuerungen 130-M bzw. 130-S.

Die Systemsteuerung 140 erhält die Signale von den Energiespeichersteuerungen 130-S über den externen Datenbus 132. Das Systemsignal kann von der Systemsteuerung 140 an das Funktionsnetz 150 über einen direkten Anschluss der Systemsteuerung 140 an das Funktionsnetz 150 ausgegeben werden. Alternativ oder ergänzend, wie im in Figur 1 gezeigten Ausführungsbeispiel, kann das Systemsignal an das Funktionsnetz 150 über den externen Datenbus 132 ausgegeben werden. Hierzu ist das Funktionsnetz 150 (beispielsweise direkt oder über ein Gateway) an den externen Datenbus 132 angeschlossen.

Die Speicherzellen 122 eines Zellmoduls 120 sind (beispielsweise in Reihe) zusammengeschalten. Die aus der Zusammenschaltung resultierenden Anschlussklemmen 127 sind über Stromschienen 128 verbunden. Die Stromschienen 128 können aus Aluminium oder einem anderen leitenden Material gefertigt sein.

Die aus dem Verbund der Zellmodule 120 jedes Energiespeichers 110 resultierenden Pole bilden eine Energiespeicherhochvoltschnittstelle 114 (nachfolgend: Hochvoltschnittstelle). Die Hochvoltschnittstellen 114 sind parallel oder in Reihe verschaltet und mit einem Leistungsnetz 160 des Fahrzeugs verbunden oder verbindbar. Das Leistungsnetz 160 kann ein Hochvoltbordnetz des Fahrzeugs umfassen. Ein Antriebsstrang (beispielsweise ein Kurbelwellen-Startergenerator) des Fahrzeugs kann mit dem Leistungsnetz 160 verbunden sein zur Entnahme der im TES-System 100 gespeicherten Energie und/oder zum Laden des TES-Systems 100, beispielsweise bei einem rekuperativen Bremsvorgang. Das Leistungsnetz 160 kann auch als Traktionsnetz bezeichnet werden. Das Leistungsnetz 160 kann eine Spannung von mindestens 60 Volt, beispielsweise zwischen 540 Volt und 738 Volt, bereitstellen. Alternativ oder ergänzend kann das Leistungsnetz 160 jedes Hochvolt-Bordnetz im Sinne des Fahrzeugbaus sein. Eine Topologie des Leistungsnetzes 160 und/oder dessen Komponenten können das Leistungsnetz 160 gegenüber einem Niedervoltnetz (von beispielsweise 24 Volt) abgrenzen. Die Topologie kann einer bekannten Fahrzeugtopologie für Hybrid-, Plug-In- oder Elektrofahrzeuge entsprechen oder angepasst sein. Die Komponenten können einen Umrichter (oder Inverter) für Fahrantriebe, das TES-System 100, eine oder mehrere elektrische Maschinen, Nebenaggregate und/oder einen Kabelbaum umfassen.

Vorzugsweise ist in jedem Energiespeicher 110 mindestens ein Schaltschütz 170 zwischen den Zellmodulen 120 und dem Leistungsnetz 160 angeordnet. Das Schaltschütz 170 wird beziehungsweise die Schaltschütze 170 werden von der Energiespeichersteuerung 130 im gleichen Energiespeicher 110 über die mit Bezugszeichen 172 gezeigte Steuerleitung zum wahlweisen Trennen des jeweiligen Energiespeichers 110 vom Leistungsnetz 160 gesteuert. Das Schaltschütz 170 kann Teil einer Schützbox sein, die ferner die elektrische Isolation der Stromschienen 128 (z. B. gegenüber einem Referenzpotential) überwacht, den über die Stromschienen 128 fließenden Strom misst und/oder die an den Stromschienen 128 anliegende Spannung misst.

In einem Betriebszustand des TES-Systems 100 sind die Schaltschütze 170 aller (funktionsfähigen) Energiespeicher 110 geschlossen (Schließstellung). Durch Öffnen des Schaltschützes 170 oder der Schaltschütze 170 kann der entsprechende Energiespeicher 110 im Betriebszustand des TES-Systems 100 aus dem Verbund des TES-Systems 100 isoliert werden, beispielsweise bei einem unzulässigen Speicherzustand. Durch Öffnen des Schaltschützes 170 in einem Angleichungszustand des TES-Systems 100 kann der entsprechende Energiespeicher 110 von einem Ladungsaustausch ausgeschlossen werden, beispielsweise falls dessen Speicherzustand keine Anpassung erfordert. Vermittels der jeweiligen Energiespeichersteuerung 130 bewirkt die Systemsteuerung 140 im Ruhezustand des TES-Systems 100 die Offenstellung der Schaltschütze 170 aller Energiespeicher 110.

Weiterhin kann ein Vorladeschaltschütz (oder kurz: Vorladeschütz) und ein mit dem Vorladeschaltschütz in Reihe geschalteter Vorladewiderstand in jedem Energiespeicher 110 parallel zu einem der Schaltschütze 170 (die auch als Hauptschütze bezeichnet werden können) verbaut sein. Der Vorladewiderstand kann ein Kaltleiter oder PTC-Widerstand sein. Unmittelbar vor der Schließstellung (z. B. für den Betriebszustand oder den Angleichungszustand) kann die Energiespeichersteuerung 130 den Vorladeschaltschütz schließen. Die Energiespeichersteuerung 130 kann die Schließstellung der Schaltschütze 170 bewirken, sobald einen Spannungsdifferenz am Vorladewiderstand einen Schwellwert unterschreitet.

Die Systemsteuerung 140 ist ferner zur bidirektionalen Kommunikation mit dem Funktionsnetz 150 des Fahrzeugs ausgebildet. Beispielsweise können die Systemsignale in Reaktion auf ein Fahrzeugsignal erzeugt und ausgegeben werden. Ferner kann das Fahrzeugsignal eine Steuerungsanweisung umfassen. Die Systemsteuerung 140 analysiert die Steuerungsanweisung zur Bestimmung derjenigen Energiespeicher 110, die zur Umsetzung der Steuerungsanweisung relevant sind, und gibt ein Steuersignal an die Energiespeichersteuerungen 130 der betreffenden Energiespeicher 110 aus.

Das TES-System 100 kann durch den modularen Aufbau auf der Ebene der Energiespeicher 110 skalierbar eingesetzt werden. Die Energiespeicher 110 sind mehrfach parallel oder seriell verschaltbar. Durch die Wahl der Verschaltung und der Anzahl verschalteter Energiespeicher 110 ist das TES-System 100 auf eine Fahrzeug-spezifische Leistungs- und Energieanforderung ausgestaltbar. Diese Anforderungen hängen vom Grad der Elektrifizierung des Antriebsstrangs des Fahrzeugs ab. Ferner kann die Leistungsanforderung durch eine Transportleistung des Fahrzeugs, beispielsweise des Nutzfahrzeugs, und die Energieanforderung durch eine Reichweite des Fahrzeugs bestimmt sein.

Die Systemsteuerung 140 stellt hinsichtlich einer physischen Schnittstelle und eines Kommunikationsprotokolls eine einheitliche Datenschnittstelle zum Fahrzeug bereit, die unabhängig von der Fahrzeug-spezifischen Ausgestaltung des TES-Systems 100 ist. Die mehreren Energiespeicher 110 verhalten sich aufgrund der Kommunikation über die Systemsteuerung 140 gegenüber dem Fahrzeug wie ein entsprechend großer Energiespeicher. Dadurch wird ein Fahrzeug-spezifischer Integrationsaufwand minimiert.

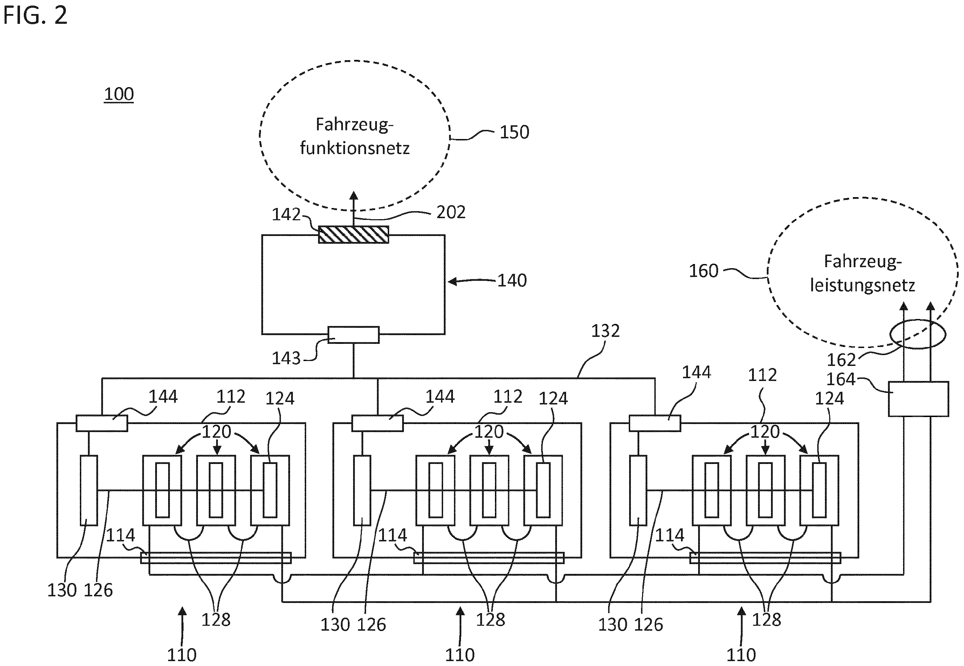

Figur 2 zeigt ein schematisches Blockschaltbild eines zweiten Ausführungsbeispiels eines TES-Systems 100. Mit den anderen Ausführungsbeispielen übereinstimmende Bezugszeichen bezeichnen entsprechende oder identische Merkmale.

Die Systemsteuerung 140 ist außerhalb der Gehäuse 112 der Energiespeicher 110 angeordnet. Die Systemsteuerung 140 umfasst eine erste Datenschnittstelle 142 für die fahrzeugseitige Kommunikation. Beispielsweise ist die erste Datenschnittstelle 142 mit dem Funktionsnetz 150 und/oder einer Motorsteuerung verbunden. Ferner umfasst die Systemsteuerung 140 eine zweite Datenschnittstelle 143, die über den externen Datenbus 132 mit Datenschnittstellen 144 der Energiespeicher 110 verbunden ist. Die Systemsteuerung 140 erhält die Signale der einzelnen Energiespeicher 110 über die zweite Datenschnittstelle 143. Das Systemsignal wird über die erste Datenschnittstelle 142 ausgegeben.

Die Hochvoltschnittstellen 114 der einzelnen Energiespeicher 110 sind parallel verschaltet und an das Leistungsnetz 160 und/oder einen Wechselrichter angeschlossen.

In jedem Ausführungsbeispiel kann eine Systemhochvoltschnittstelle 162 zum Energieaustausch zwischen dem TES-System 100 und dem Leistungsnetz 160 des Fahrzeugs vorgesehen sein. Ein von der Systemsteuerung 140 gesteuertes Systemschaltschütz 164 ermöglicht, die Systemhochvoltschnittstelle 162 spannungsfrei zu schalten. Alternativ kann das Systemschaltschütz 164 in einer Hochvoltverteilungseinheit des Leistungsnetzes 160 angeordnet sein. In diesem Fall kann das Systemschaltschütz 164 direkt (beispielsweise über den externen Datenbus 132) oder mittelbar (beispielsweise über eine Komponente des Funktionsnetzes 150) von der Systemsteuerung 140 gesteuert werden.

Die erste Datenschnittstelle 142 ist an einen seriellen Bus 202 des Fahrzeugfunktionsnetzes 150, beispielsweise einen vom TES-System 100 unabhängigen CAN-Bus, angeschlossen.

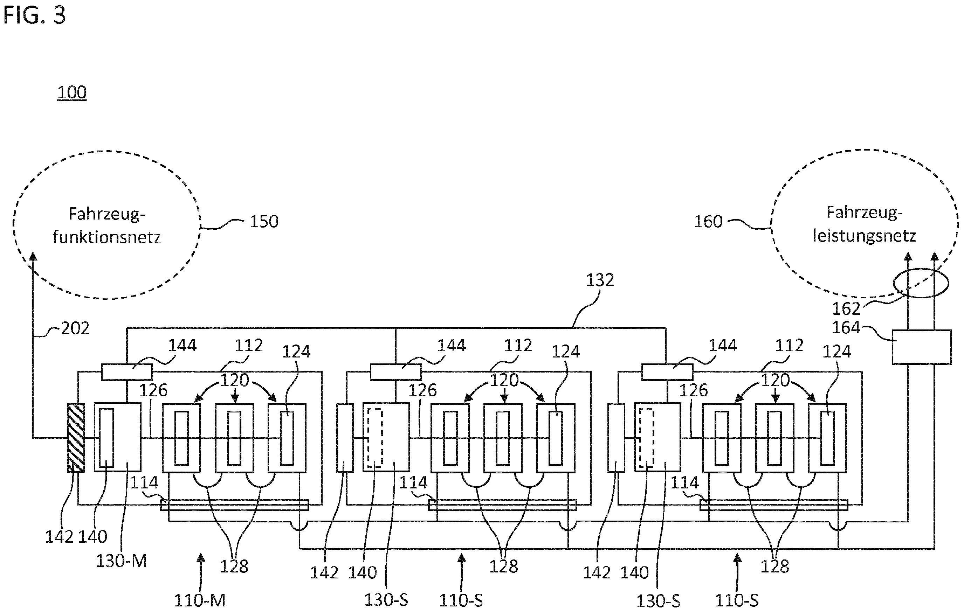

Figur 3 zeigt ein schematisches Blockschaltbild eines dritten Ausführungsbeispiels eines TES-Systems 100 für ein Fahrzeug. Das dritte Ausführungsbeispiel unterscheidet sich vom zweiten Ausführungsbeispiel dadurch, dass die Funktion der Systemsteuerung 140 in einem Energiespeicher 110-M der Energiespeicher 110 ausgeführt wird. Hierzu umfasst der Energiespeicher 110-M die erste Datenschnittstelle 142. Über eine zweite Datenschnittstelle 144 erhält der Energiespeicher 110-M die Signale der anderen Energiespeicher 110-S, die nicht die Funktion der Systemsteuerung 140 ausführen. Die erste Datenschnittstelle 142 und die zweite Datenschnittstelle 144 sind jeweils im Energiespeicher 110-M mit der Energiespeichersteuerung 130-M verbunden, die die Funktion der Systemsteuerung 140 ausführt.

Alle Energiespeicher 110-M und 110-S (oder zumindest deren Energiespeichersteuerungen 130-M bzw. 130-S) sind vorzugsweise baugleich. Auch die Energiespeicher 110-S können eine erste Datenschnittstelle 142 umfassen, die außerhalb des Energiespeichers 110-S unverbunden ist. Die zweiten Datenschnittstellen 144 aller Energiespeicher 110-M und 110-S sind über den externen Datenbus 132 verbunden.

In einer bevorzugten Ausgestaltung ist die Funktion der Systemsteuerung 140 auch in jeder Energiespeichersteuerung 130-S der Energiespeicher 110-S implementiert und nicht zur Ausführung aktiviert (gezeigt als gestrichelter Funktionsblock in Figur 3). Durch Setzen eines oder mehrerer Parameter der Energiespeichersteuerung 130 kann die Funktion der Systemsteuerung 140 wahlweise zur Ausführung aktiviert und deaktiviert werden.

Die in den Figuren 2 und 3 gezeigte Parallelschaltung der drei Hochvoltschnittstellen 114 ist beispielhaft. Abhängig von den Anforderungen des Fahrzeugleistungsnetzes 160 (z. B. hinsichtlich Strom, Spannung, Leistung und/oder Energie) kann eine größere Anzahl an Energiespeichern 110 und/oder eine andere Verschaltung der Hochvoltschnittstellen 114 eingesetzt werden. Insbesondere können die Hochvoltschnittstellen 114 innerhalb jeweils einer Gruppe von Energiespeichern 110 in Reihe geschaltet sein, und die Gruppen untereinander parallel geschaltet sein.

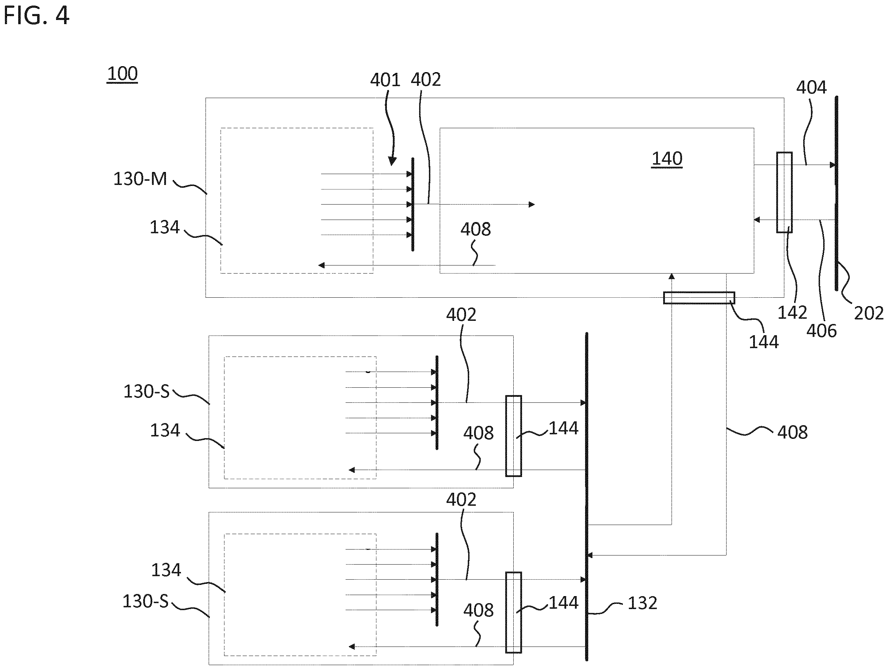

Figur 4 zeigt ein funktionales Blockdiagramm des TES-Systems 100, dessen funktionale Merkmale optional in jedem der vorgenannten Ausführungsbeispiele implementiert sind. Die funktionalen Merkmale können zumindest teilweise durch einen anwendungsspezifischen integrierten Schaltkreis (ASIC) implementiert sein und/oder in einem Speicher kodiert sein, auf den ein Prozessor zur Ausführung der funktionalen Merkmale zugreift.

Die Energiespeichersteuerung 130-M, welche die Funktion der Systemsteuerung 140 ausführt, kann aus einem Slave-Funktionsumfang 134 und dem Funktionsumfang der Systemsteuerung 140 zusammengesetzt sein. Der Slave-Funktionsumfang 134 kann dem Funktionsumfang für den Einzelbetrieb eines einzigen Energiespeichers und/oder dem Betrieb als Slave-Energiespeicher 110-S entsprechen. Der Slave-Funktionsumfang 134 kann mit dem (aktiven) Funktionsumfang der anderen Energiespeichersteuerungen 130-S übereinstimmen. Der Slave-Funktionsumfang 134 kann einen bestehenden Funktionsumfang eines herkömmlichen Energiespeichers beinhalten. Dadurch kann der Energiespeicher 110 abwärtskompatibel zum Einzelbetrieb sein.

Die Speicherzellen 122 im Energiespeicher 110-M betreffende Daten 401 werden von der Energiespeichersteuerung 130-M in ein Anwendungsformat der Systemsteuerung 140 multiplexiert und an einer virtuellen oder physischen Schnittstelle als Signal 402 des Energiespeichers 110-M an die Systemsteuerung 140 übergeben. Entsprechende Daten betreffend die Speicherzellen 122 der jeweils anderen Energiespeicher 110-S werden in den jeweiligen Energiespeichersteuerungen 130-S in das Anwendungsformat der Systemsteuerung 140 multiplexiert und als das Signal 402 des Energiespeichers 110-S an der zweiten Datenschnittstelle 144 des jeweiligen Energiespeichers 110-S mittels des externen Datenbusses 132 an die Systemsteuerung 140 ausgegeben. Auf Grundlage der Signale 402 der Energiespeicher 110 gibt die Systemsteuerung 140 das Systemsignal 404 an der ersten Datenschnittstelle 142 aus.

In der entgegengesetzten Kommunikationsrichtung kann die Systemsteuerung 140 ein Fahrzeugsignal 406 an der ersten Datenschnittstelle 142 erhalten. Optional verarbeitet die Systemsteuerung 140 das Fahrzeugsignal 406. Die Systemsteuerung 140 leitet (gegebenenfalls nach der Signalverarbeitung) das Fahrzeugsignal 406 selektiv weiter oder gibt ein aus dem Fahrzeugsignal 406 abgeleitetes Steuersignal 408 an den Slave-Funktionsumfang 134 der jeweils betreffenden Energiespeichersteuerungen 130-M und/oder 130-S aus.

Die Konfiguration einer jeden Energiespeichersteuerung 130 als Master-Energiespeichersteuerung 130-M mit aktivierter Funktion der Systemsteuerung 140 oder als Slave-Energiespeichersystemsteuerung 130-S mit deaktivierter Funktion der Systemsteuerung 140 kann dadurch erreicht werden, dass die in allen Energiespeichersteuerungen 130 implementierte Funktion der Systemsteuerung 140 im deaktivierten Zustand eine Weiterleitungsfunktion ausführt. Die Weiterleitungsfunktion leitet die Signale 402 (d. h., die multiplexierten Daten) direkt an die zweite Datenschnittstelle 144 des jeweiligen Energiespeichers 110-S zur Ausgabe weiter. Die an der zweiten Datenschnittstelle 144 des jeweiligen Energiespeichers 110-S erhaltenen Steuersignale 408 werden an den Slave-Funktionsumfang 134 der Energiespeichersteuerung 130-S weitergeleitet.

Beispielsweise kann an der ersten Datenschnittstelle 142 ein Notabschaltsignal 406 vom Fahrzeug erhalten werden. In Reaktion auf das erhaltene Notabschaltsignal 406 gibt die Systemsteuerung 140 an das Schaltschütz 170 des eigenen Energiespeichers 110-M und über den externen Datenbus 132 an alle anderen Schaltschütze 170 ein Steuersignal 408 zur Trennung (d. h. Potenzialfreischaltung) der Hochvoltschnittstellen 114 aus.

Durch die mit der Systemsteuerung 140 verbundene erste Datenschnittstelle 142 ist eine einzige Kommunikationsschnittstelle zum Fahrzeug bereitgestellt, so dass das TES-System 100 hinsichtlich der Kommunikation mit dem Funktionsnetz 150 des Fahrzeugs einem einzigen Energiespeicher mit entsprechenden Speichereigenschaften gleicht. Vorzugsweise kann durch Konfiguration der Parameter der Energiespeichersteuerung 130 jeder einzelne Energiespeicher 110 wahlweise als unverbundener Einzel-Energiespeicher, als Master-Energiespeicher 110-M im Verbund des TES-Systems 100 oder als Slave-Energiespeicher 110-S im Verbund des TES-Systems 100 konfiguriert werden.

Die Systemsteuerung 140 gibt mit dem Systemsignal 404 beispielsweise einen aggregierten gemeinsamen Zustand (oder Status) aller zum TES-System 100 gehörenden Energiespeicher 110 aus. Jedes Signal 402, das von einer der Slave-Energiespeichersteuerungen 130-S ausgegeben wird, wird in der Master-Energiespeichersteuerung 130-M von der Systemsteuerung 140 mit den entsprechenden Signalen 402 (soweit vorhanden) der anderen Energiespeicher 110 aggregiert und als ein gemeinsamer Wert als das Systemsignal 404 nach außen zum Fahrzeug über die erste Datenschnittstelle 142 kommuniziert.

Die Aggregation beinhaltet auch eine Kontrollfunktion. Beispielsweise umfasst die Kontrollfunktion eine Überprüfung des Verbindungsstatus aller Energiespeicher 110 am externen Datenbus 132. Alternativ oder ergänzend umfasst die Kontrollfunktion eine Plausibilitätsprüfung der von den Slave-Energiespeichersteuerungen 130-S erhaltenen Signale. Die Plausibilitätsprüfung vergleicht das erhaltene Signal mit für den Signaltyp in der Systemsteuerung 140 gespeicherten Grenzwerten (z. B. Stromgrenzen) für den jeweiligen Energiespeicher 110-S.

Ist ein erhaltenes Signal fehlerhaft, nicht plausibel oder nicht vorhanden, führt die Systemsteuerung 140 eine Fehlerreaktion aus.

Bestimmen die Daten 402 elektrotechnische Größen (beispielsweise einen momentanen Strom, einen maximal entnehmbaren Strom, eine momentane Spannung oder eine Restladung), berechnet die Systemsteuerung 140 in Abhängigkeit der Verschaltung der Hochvoltschnittstellen 114 die aggregierte elektrotechnische Größe und gibt diese als das Systemsignal aus. Die verwendete Verschaltung der Hochvoltschnittstellen 114 wird im Zuge der Konfiguration des Master-Energiespeichers 110-S in der Systemsteuerung 140 gespeichert. Beispielsweise sind in der Systemsteuerung 140 in Abhängigkeit von der Verschaltung Aggregationsregeln gespeichert. Die Aggregationsregeln können sowohl für elektrotechnische Größen als auch Zustandsgrößen (beispielsweise Ladezustand oder Alterungszustand) definiert sein.

Die Signale 402 der einzelnen Energiespeicher 110, die eine gemessene Temperatur angeben, werden durch Auffinden eines Extremwerts unter den signalisierten Temperaturwerten aggregiert. Beispielsweise wird unter allen signalisierten Temperaturwerten, die größer als 0°C sind, der größte Temperaturwert im Systemsignal 404 ausgegeben. Alternativ oder ergänzend wird unter allen signalisierten Temperaturwerten, die kleiner oder gleich 0°C sind, der kleinste Temperaturwert im Systemsignal 404 ausgegeben.

Vorzugsweise werden die einzelnen Energiespeicher 110 durch eine gemeinsame Kühlmittelzirkulation in einem Betriebstemperaturbereich gehalten. Unter den von den einzelnen Energiespeichern 110 signalisierten Temperaturwerten des Kühlmittels wird der größte Temperaturwert als das Systemsignal ausgegeben.

Die von den einzelnen Energiespeichern 110 erhaltenen Signale 402 geben optional eine Ladung (z. B. in Coulomb, beispielsweise eine verbleibende Restladung) an. Die Summe der signalisierten Ladungen wird im Systemsignal 404 ausgegeben.

Optional geben die Signale 402 für jeden verfügbaren Energiespeicher 110 einen Maximalstrom an. Beispielsweise wird der kleinste Maximalstrom (aus den signalisierten Maximalströmen der einzelnen Energiespeicher 110) mit der Anzahl verfügbarer Energiespeicher 110 multipliziert und im Systemsignal 404 ausgegeben. Ein Energiespeicher 110 ist verfügbar, wenn von ihm keine Fehlermeldung vorliegt und kein Fehler durch die Systemsteuerung 140 festgestellt wurde.

Dadurch kann sichergestellt werden, dass jeder einzelne Energiespeicher 110 innerhalb der für seine Eigensicherheit fortlaufend geprüften Grenzen betrieben wird. Ferner kann durch den Ausschluss fehlerhafter Energiespeicher 110 aufgrund der parallelen Verschaltung der Hochvoltschnittstellen 114 mit nur einem Teil der Energiespeicher 110 das Fahrzeug betrieben werden. Dadurch kann ein redundanter Betrieb (z. B. bei einer Überkapazität an Energiespeichern 110) oder ein Notbetrieb (z. B. ein sogenannter "Limp Home Mode") realisiert werden.

Fehlerhafte Energiespeicher 110 werden mittels des jeweiligen Schaltschützes 170 oder der jeweiligen Schaltschütze 170 vom Leistungsnetz 160 getrennt. Jeder einzelne Energiespeicher 110 implementiert seine Eigensicherheit. Dadurch kann die Systemsteuerung 140 ohne Sicherheitsrelevanz sein.

Optional geben die Signale 402 der einzelnen Energiespeicher 110 einen Energieinhalt des jeweiligen Energiespeichers 110 an. Das Systemsignal 404 gibt einen entnehmbaren Gesamtenergieinhalt an. Das Systemsignal 404 kann auf einer (optional gewichteten) Summe der einzelnen Energieinhalte basieren. Der Beitrag der einzelnen Energieinhalte jedes Energiespeichers 110 zum entnehmbaren Gesamtenergieinhalt kann aus einem anteiligen Batteriestrom bestimmt werden.

Auf Grundlage eines von jedem Energiespeicher 110 signalisierten Innenwiderstandswerts des jeweiligen Energiespeichers 110 kann gemäß der Verschaltung der Hochvoltschnittstellen 114 der Gesamtwiderstand berechnet und als Systemsignal 404 ausgegeben werden. Alternativ oder ergänzend bestimmt die Systemsteuerung 140 auf Grundlage der signalisierten Innenwiderstandswerte den anteiligen Batteriestrom.

Optional erhält die Systemsteuerung 140 von jedem Energiespeicher 110 Signale 402 mit Lebensdauer-optimierten Grenzwerten (für eine Obergrenze und eine Untergrenze) des Ladezustands (auch als "State of Charge" oder SoC bezeichnet). Zur Aggregation der Lebensdauer-optimierten Grenzwerte des Ladezustands wählt die Systemsteuerung 140 die Lebensdauer-optimalen Grenzwerte des Ladezustands aus, welche mit der daraus resultierenden Stromverteilung aller Energiespeicher 110 möglichst optimal auf eine Soll-Alterungskurve zurückführen. Dabei wird die resultierende Stromverteilung der einzelnen Energiespeicher 110 aus dem von den einzelnen Energiespeichern 110 signalisierten Innenwiderstandswerten von der Systemsteuerung 140 berechnet.

Die einzelnen Energiespeicher 110 können ferner einen Alterungszustand (auch als "State of Health" oder SoH bezeichnet) des jeweiligen Energiespeichers 110 angeben. Der Alterungszustand der einzelnen Energiespeicher 110 wird von der Systemsteuerung 140 als Fehlerindikator des jeweiligen Energiespeichers 110 (z. B. beim Überschreiten von Grenzwerten) und/oder zur Berechnung eines Lebensdauer-optimierten Grenzwerts für den Strom des jeweiligen Energiespeichers 110 oder des TES-Systems 100 verwendet.

Alternativ oder ergänzend kann der Ladezustand und/oder der Alterungszustand nach denselben Aggregationsregeln berechnet werden, die auch für die Zustandsaggregation der einzelnen Speicherzellen 122 innerhalb der Zellmodulsteuerung 124 implementiert sind.

Die Signale 402 der einzelnen Energiespeicher 110 geben einen Spannungswert (beispielsweise einen gegenwärtigen und/oder einen vorhergesagten Spannungswert) für die einzelnen Energiespeicher 110 an. Das Systemsignal 404 für den entsprechenden Spannungswert wird gemäß der Verschaltung der Hochvoltschnittstellen 114 von der Systemsteuerung 140 berechnet.

Allgemein kann ein Systemzustand 404 des TES-Systems 100 bestimmt werden, indem der sicherste oder konservativste Zustand aus den von den Energiespeichern 110 als verfügbar signalisierten Zuständen 402 ausgewählt wird. Alternativ oder ergänzend kann das TES-System 100 gemäß dem leistungsschwächsten Energiespeichersystem 110 betrieben wird. Der sicherste Zustand kann der für den momentanen Betrieb aller Energiespeicher 110 zuverlässigste Zustand sein. Der konservativste Zustand kann eine Lebensdauer aller Energiespeicher 110 maximieren.

In der Kommunikationsrichtung vom Fahrzeug zu den Energiespeichern 110 werden alle Fahrzeugsignale 406, welche die Master-Energiespeichersteuerung 110-M vom Fahrzeug erhält, an den jeweiligen Slave-Funktionsumfang 134 der einzelnen Energiespeichersteuerungen 130 verteilt. Gegebenenfalls wird das Fahrzeugsignal dabei in ein für jede einzelne Energiespeichersteuerung 130 spezifisches Steuersignal 408 umgesetzt.

Die Aggregation und Verteilung der Signale durch die Systemsteuerung 140 betrifft auch die Diagnose des TES-Systems 100 (z. B. Diagnoseanforderungen vom Fahrzeug an die Systemsteuerung 140 und Diagnosemeldungen von der Systemsteuerung 140 an das Fahrzeug). Diagnosemeldungen der einzelnen Energiespeichersteuerungen 130 werden durch die Systemsteuerung 140 gesammelt und aggregiert an das Fahrzeug über die erste Datenschnittstelle 142 ausgegeben. Die Aggregation kann beispielsweise die Bildung eines einheitlichen Datensatzes in einem Datenpaket des Systemsignals 404 umfassen. Im Datensatz sind Diagnosewerte bezüglich der einzelnen Zellmodule 120 ohne eine Gruppierung in Energiespeicher 110 aufgelistet.

Diagnoseabfragen (die auch als Diagnoseroutinen bezeichnet werden) vom Fahrzeug werden an der ersten Datenschnittstelle 142 der Systemsteuerung 140 erhalten und an den bestehenden Funktionsumfang 134 der einzelnen Energiespeichersteuerungen 130 weitergeleitet.

Im Betriebszustand des TES-Systems 100 sind das Systemschaltschütz 164 und die (beispielsweise an den Hochvoltschnittstellen 114 implementierten) Schaltschütze 170 geschlossen. Im Betriebszustand fließen Lade- und Entladeströme durch die Systemhochvoltschnittstelle 162 zu beziehungsweise von den Energiespeichern 110. Im Betriebszustand sind die Spannungen an den Hochvoltschnittstellen 114 aufgrund der Parallelschaltung der Energiespeicher 110 einheitlich. Jedoch verteilt sich der durch die Systemhochvoltschnittstelle 162 fließende Strom nicht zu gleichen Teilen auf die Hochvoltschnittstellen 114 der einzelnen Energiespeicher 110, da sich die Energiespeicher 110 in ihren elektrischen und/oder elektrochemischen Speicherzuständen unterscheiden.

Die Speicherkapazität jedes Energiespeichers 110 beschreibt seine Speicherfähigkeit als die im vollständig geladenen Zustand entnehmbare Ladung (z. B. das Zeitintegral des Entladestroms von Anfangsspannung bis Schlussspannung). Der Ladezustand (auch als "State of Charge" oder SoC bezeichnet) jedes Energiespeichers 110 ist der Anteil der noch entnehmbaren Ladung an der Speicherkapazität. Der funktionale Zusammenhang zwischen der (z. B. relaxierten) Leerlaufspannung an der Hochvoltschnittstelle 114 und dem Ladezustand des Energiespeichers 110 ist die Entladekurve. Zum elektrischen Speicherzustand jedes Energiespeichers 110 gehört ferner die Leerlaufspannung, sein Innenwiderstand, eine erste Zeitkonstante (beispielsweise verursacht durch eine elektrochemische Doppelschicht zwischen Elektrode und Elektrolyt) und/oder eine zweite Zeitkonstante (beispielsweise verursacht durch Diffusion der Ionen im Elektrolyt). Die erste Zeitkonstante kann ein Sekundenbruchteil, beispielsweise weniger als 0,1 s oder 0,01 s sein. Die zweite Zeitkonstante kann größer als die erste Zeitkonstante sein, beispielsweise größer als 1 s oder 10 s.

Mittels einer in der Energiespeichersteuerung 140 gespeicherten Entladekurve kann aufgrund der gemessenen Leerlaufspannung der momentane Ladezustand bestimmt werden. Die Entladekurve kann tabellierten und/oder durch Integration des Stroms im Betriebszustand aktualisiert werden.

Die einzelnen Energiespeicher 110 im TES-System 110 unterscheiden sich in ihren Speicherzuständen, beispielsweise hinsichtlich Speicherkapazität, Entladekurve, Ladezustand, Leerlaufspannung, Innenwiderstand, erster Zeitkonstanten und/oder zweiten Zeitkonstanten. Ursache und lokale Einflussfaktoren der abweichenden Speicherzustände der einzelnen Energiespeicher 110 sind beispielsweise Fertigungsstreuung, Alterung und Temperatur.

Deshalb liegen nach einem Betriebszustand, beispielsweisen wenn das Fahrzeug abgestellt wird und/oder eine Klemme der Fahrzeugzündung auf einem Referenzpotential liegt, die Energiespeicher 110 in unterschiedlichen Speicherzuständen vor. Beispielsweise können Ladezustand und/oder Leerlaufspannung der einzelnen Energiespeicher 110 uneinheitlich sein. Solche abweichenden Speicherzustände können im Betriebszustand auch bei im Wesentlichen übereinstimmenden Speicherkapazitäten und Entladekurven durch unterschiedliche Innenwiderstände oder Zeitkonstanten entstehen.

Nach dem Betriebszustand können Relaxationseffekte (beispielsweise mit unterschiedlichen zweiten Zeitkonstanten) und/oder Selbstentladung (beispielsweise mit unterschiedlichen Entladungsraten) die Abweichung zwischen den Zell-, Modul- und Speicherzuständen vergrößern. Unterschiedliche Ladezustände der einzelnen Energiespeicher 110 verringern jedoch den Ladezustand des TES-Systems 100, beispielsweise auf den kleinsten Ladezustand unter den Energiespeichern 110.

Unterschiedliche Leerlaufspannungen führen beim Schließen der Schaltschütze 170 der Energiespeicher 110 zu Ausgleichsströmen (beispielsweise zu Beginn des nächsten Betriebszustands), welche die Schaltschütze 170 schädigen können. Wird die Spannungsdifferenz größer als eine schaltbare Maximalspannung oder übersteigt der durch die Spannungsdifferenz verursachte Ausgleichsstrom einen (von zumindest einem der Energiespeicher 110 für dessen Eigensicherheit) überwachten Maximalstrom, kann ein Schließen (und damit ein weiteren Betriebszustand des TES-Systems 100) unmöglich sein.

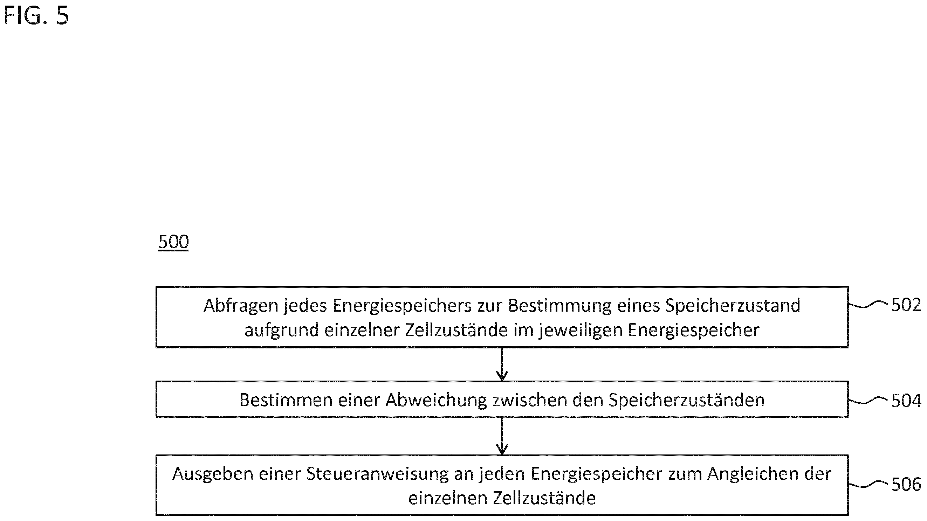

Figur 5 zeigt ein Ablaufdiagramm für ein Verfahren 500 zum Angleichen von Zellzuständen eines TES-Systems 100. Das Verfahren kann von der Systemsteuerung 140 in einem Ruhezustand (beispielsweise nach oder vor einem Betriebszustand) ausgeführt werden. Alternativ oder ergänzend kann das Verfahren 500 periodisch ausgeführt werden, beispielsweise wenn der Ruhezustand länger als eine vorgegebene Zeitdauer besteht.

In einem Schritt 502 fragt die Systemsteuerung 140 von jeder Energiespeichersteuerung 130 im TES-System 100 einen Speicherzustand ab. Der Speicherzustand basiert direkt oder indirekt auf den Zellzuständen aller Speicherzellen 122 im jeweiligen Energiespeicher 110. Falls das TES-System 100 anfänglich im Ruhezustand ist, aktiviert das Abfragen die Energiespeichersteuerungen 130.

In einem Schritt 504 des Verfahrens 500 wird eine Abweichung der Speicherzustände im TES-System 100 bestimmt. Beispielsweise kann jeder Speicherzustand ein Minimum, einen Mittelwert und/oder eine Streubreite der Zellzustände aller Zellen 122 im jeweiligen Energiespeicher 110 angeben. Zur Bestimmung der Abweichung kann die Systemsteuerung 140 ein Minimum, einen Mittelwert und/oder eine Streuung für das TES-System 100 auf Grundlage der Speicherzustände berechnen. Beispielsweise wird ein globales Minimum aller Zellzustände als das Minimum der Minima in den Speicherzuständen bestimmt. Alternativ oder ergänzend wird durch Mittelung der Mittelwerte in den Speicherzuständen ein globaler Mittelwert der Zellzustände bestimmt. Optional wird eine globale Streuung der Zellzustände durch Addition der Streuungen (beispielsweise der Varianzen) in den Speicherzuständen bestimmt.

Abhängig von der bestimmten Abweichung, beispielsweise falls die globale Streuung einen Schwellwert überschreitet, weist die Systemsteuerung 140 in einem Schritt 506 eine oder mehrere Energiespeichersteuerungen 130 an, die Zellzustande anzugleichen. Die Steueranweisung enthält als Steuerparameter einen Sollwert für den Zellzustand. Durch Vorgabe des Sollwerts kann ein für das gesamte TES-System 100 einheitliches Niveau der Zellzustände erreicht werden, beispielsweise ohne dass die Energiespeicher 110 untereinander zum Ladungsausgleich verbunden sind. Der Sollwert kann das globale Minimum sein und die Angleichung kann durch selektives Entladen einzelner Speicherzellen 122 bis zum Sollwert erreicht werden. Alternativ kann der Sollwert der globale Mittelwert sein und die Angleichung kann durch Ladungsausgleich erreicht werden, beispielsweise durch selektive Parallelschaltung von Speicherzellen 122 oder Zellmodulen 120, oder durch eine Parallelschaltung von zwei oder mehr Energiespeichern 110.

Das Angleichen der Zellzustände kann auch als Balancen der Speicherzellen 122 bezeichnet werden. Das Angleichen der Zellzustände innerhalb von einzelnen Energiespeichern 110 wird durch die jeweilige Energiespeichersteuerung 130 gesteuert gemäß der Steueranweisung der Systemsteuerung 140. Dabei kann die Energiespeichersteuerung 130 dazu ausgebildet sein für jede Speicherzelle einen Balancing-Job zu bestimmen, der von der Zellmodulsteuerung 124 ausgeführt oder an die entsprechende Speicherzelle 122 weitergeleitet wird. Alternativ ist die Energiespeichersteuerung 130 dazu ausgebildet, für jedes Zellmodul 120 einen Balancing-Job zu bestimmen, der von der entsprechenden Zellmodulsteuerung 130 ausgeführt wird.

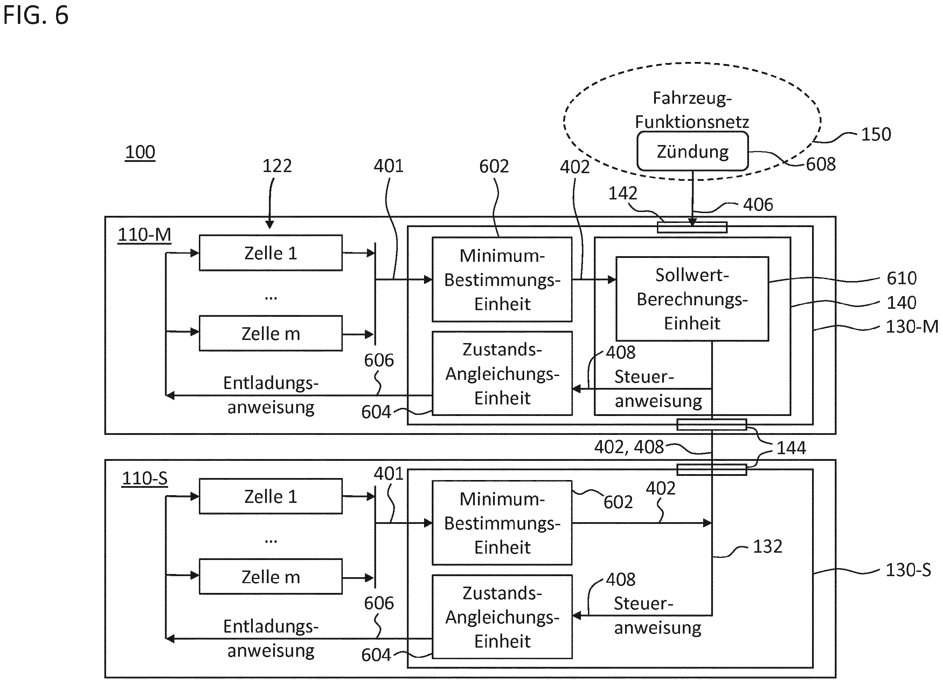

Figur 6 zeigt ein funktionales Blockdiagramm eines TES-Systems 100. Gleiche Bezugszeichen betreffen die entsprechenden, vorstehend beschriebenen Merkmale. Wenn das Fahrzeug deaktiviert ist, sind im Ruhezustand alle Slave-Energiespeicher 110-S durch die Offenstellung der Schaltschütze 170 voneinander getrennt. Aufgrund diverser Einflussfaktoren entladen sich die Speicherzellen 122 der einzelnen Energiespeicher 110 unterschiedlich stark. Für den optimalen Betrieb des TES-Systems 100 ist es jedoch wichtig, dass alle Speicherzellen 122 im gleichen Ladezustand bleiben bzw. gleiche Leerlaufspannungen aufweisen.

Jede Energiespeichersteuerung 130-M und 130-S umfasst eine Minimumbestimmungseinheit 602, die aus den Daten 401 zu den Zellzuständen der Speicherzellen 122 im jeweiligen Energiespeicher 110 den niedrigsten Zellzustand bestimmt. Dadurch können die Daten 401 als Datensatz oder deren Minimum an die Energiespeichersteuerung 130 im Signal 402 gesendet werden.

Ferner umfasst jede Energiespeichersteuerung 130-M und 130-S eine Zustandsangleichungseinheit 604, welche die Steueranweisung der Systemsteuerung 140 als Steuersignal 408 erhält und durch Entladungsanweisungen 606 an die Speicherzellen 122 das Entladen der Speicherzellen 122 bis zum Sollwert bewirkt. Die Einheiten 602 und 604 gehören zum Slave-Funktionsumfang 134 aller Energiespeichersteuerungen 130.

Die in der Master-Energiespeicherung 130-M integrierte Systemsteuerung 140 umfasst eine Sollwertberechnungseinheit 610, welche auf Grundlage der mit den Signalen 402 erhaltenen Minima den Schritt 504 ausführt und im Schritt 506 das Steuersignal 408 mit der Steueranweisung und dem Sollwert erzeugt.

Bei unterbrochener Zündung 608 bewirkt die Systemsteuerung 140 den Ruhezustand aller Komponenten des TES-Systems 100. Die Systemspeichersteuerung 140 kehrt zyklisch (beispielsweise ausgelöst durch eine batteriebetriebene Echtzeituhr) aus dem Ruhezustand in den Angleichungszustand zurück, fragt die Speicherzustände gemäß dem Schritt 502 ab, berechnet einen Balancing-Bedarf gemäß dem Schritt 504, bestimmt einen Balancing-Job für jeden Energiespeicher 110 (einschließlich der Master-Energiespeicher 110-M) und schickt die entsprechende Steueranweisung im Steuersignal 408 an die Energiespeichersteuerungen 130 zur Abarbeitung. Die Abarbeitung in den jeweils betroffenen Energiespeichern 110 kann autonom erfolgen. Danach nimmt die Systemspeichersteuerung 140 wieder den Ruhezustand an, ebenso die Energiespeichersteuerungen 130 nach Abarbeitung der Steueranweisung.

Aus der Perspektive der Energiespeicher 110 berechnet jeder Slave-Funktionsumfang 134 den minimalen Zellzustand aus den einzelnen Zellzuständen aller Speicherzellen und schickt diesen an die Systemsteuerung 140 im Master-Energiespeicher 110-M. Die Systemsteuerung 140 wertet aus allen Signalen 402 das absolute Minimum aus und schickt diese als Sollwert (oder Zielgröße) für das Balancing an jeden Slave-Funktionsumfang 134. Nachdem die Steueranweisung an den Slave-Funktionsumfang 134 in allen Energiespeichern übergeben ist, arbeiten diese den Balancing-Job autonom ab.

Das Verfahren 500 kann sequenziell zyklisch abgearbeitet werden. Zwischen einem Zyklus kann eine (beispielsweise im Vergleich zur Dauer des Verfahrens) längere Zeit liegen, in der alle Steuerkomponenten (beispielsweise die Energiespeichersteuerungen 130 und die Systemsteuerung 140) des TES-Systems 100 deaktiviert sind.

Der Zellzustand kann der Ladezustand (SoC), die Leerlaufspannung (OCV) oder eine Funktion beider sein.

Im TES-System 100 können mehr als ein (in Figur 6 gezeigter) Slave-Energiespeicher 110-S mit der Master-Energiespeicher 110-M zusammengeschaltet sein.

Durch einen regelmäßigen Wechsel in den Angleichungszustand können Ladungsdifferenzen stetig ausgeglichen werden auf der Ebene der Energiespeicher 110, der Zellmodule 120 oder der Speicherzellen 122. Dadurch kann das TES-System 100 optimal auf den nächsten Betriebszustand oder Ladevorgang vorbereit werden.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Traktionsenergiespeichersystem
- 110: Energiespeicher
- 112: Gehäuse des Energiespeichers
- 114: Hochvoltschnittstelle
- 120: Zellmodul
- 122: Speicherzellen
- 124: Zellmodulsteuerung
- 126: Interner Datenbus
- 127: Anschlussklemme
- 128: Stromschiene
- 130: Energiespeichersteuerung
- 132: Externer Datenbus
- 134: Funktionsumfang der Energiespeichersteuerung im Einzelbetrieb
- 140: Systemsteuerung
- 142: Erste Datenschnittstelle
- 144: Zweite Datenschnittstelle
- 150: Funktionsnetz des Fahrzeugs
- 160: Leistungsnetz des Fahrzeugs
- 162: Systemhochvoltschnittstelle
- 164: Systemschaltschütz
- 170: Schaltschütz
- 172: Steuerverbindung zwischen Energiespeichersteuerung und Schaltschütz
- 202: CAN-Bus des Funktionsnetzes
- 401: Speicherzellendaten
- 402: Signal des Energiespeichers
- 404: Systemsignal
- 406: Fahrzeugsignal
- 408: Steuersignal
- 500: Verfahren zur Zustandsangleichung
- 502: Schritt des Abfragens
- 504: Schritt des Bestimmens
- 506: Schritt des Ausgebens
- 602: Minimumbestimmungseinheit
- 604: Zustandsangleichungseinheit
- 606: Entladungsanweisung
- 608: Fahrzeugzündung
- 610: Sollwertberechnungseinheit

## Patentansprüche

1. Traktionsenergiespeichersystem (100) für ein Fahrzeug, umfassend:
mehrere elektrische Energiespeicher (110),
wobei jeder der Energiespeicher ein oder mehrere zusammengeschaltete Zellmodule (120) und eine mit dem mindestens einen Zellmodul (120) in Signalverbindung stehende Energiespeichersteuerung (130) umfasst, und das mindestens eine Zellmodul (120) jeweils mehrere zusammengeschaltete Speicherzellen (122) und eine mit den Speicherzellen (122) in Signalverbindung stehende Zellmodulsteuerung (124) umfasst,
wobei jede Zellmodulsteuerung (124) dazu ausgebildet ist, Zellzustände der in Signalverbindung stehenden Speicherzellen zu erfassen und aufgrund der erfassten Zellzustände einen Modulzustand auszugeben, und
wobei jede Energiespeichersteuerung (130) dazu ausgebildet ist, aufgrund des mindestens einen Modulzustands einen Speicherzustand zu bestimmen; und
eine mit den Energiespeichersteuerungen in Signalverbindung stehende Systemsteuerung (140),
wobei die Systemsteuerung (140) dazu ausgebildet ist, abhängig von den Speicherzuständen eine Steueranweisung zum Angleichen der Zellzustände an die Energiespeichersteuerungen (130) auszugeben, und
wobei die Energiespeichersteuerungen (130) ferner dazu ausgebildet sind, die Zellmodulsteuerungen (124) zum Angleichen der Zellzustände gemäß der Steueranweisung zu steuern.

2. Traktionsenergiespeichersystem nach Anspruch 1, wobei die Energiespeichersteuerungen (130) ferner dazu ausgebildet sind, das Angleichen der Zellzustände gemäß der Steueranweisung zu steuern während die Energiespeicher (110) ohne Ladungsaustausch voneinander getrennt sind.

3. Traktionsenergiespeichersystem nach Anspruch 1, wobei jede Zellmodulsteuerung (124) dazu ausgebildet ist, im Modulzustand die erfassten Zellzustände weiterzuleiten oder den Modulzustand aufgrund eines Minimums der erfassten Zellzustände zu bestimmen, und/oder wobei jede Energiespeichersteuerung (130) dazu ausgebildet ist, aufgrund eines Minimums des mindestens einen Modulzustands den Speicherzustand zu bestimmen.

4. Traktionsenergiespeichersystem nach einem der Ansprüche 1 bis 3, wobei die Steueranweisung einen Sollwert für den Zellzustand umfasst, optional eine an alle Energiespeichersteuerungen vorgegebene und einheitliche Ziel-Zellspannung.

5. Traktionsenergiespeichersystem nach Anspruch 4, wobei die Systemsteuerung (140) ferner dazu ausgebildet ist, den Sollwert aufgrund eines Minimums der Speicherzustände zu bestimmen.

6. Traktionsenergiespeichersystem nach Anspruch 4 oder 5, wobei jede Zellmodulsteuerung ferner dazu ausgebildet ist, die mit der jeweiligen Zellmodulsteuerung in Signalverbindung stehenden Speicherzellen bis zum Erreichen des Sollwerts zu entladen.

7. Traktionsenergiespeichersystem nach einem der Ansprüche 1 bis 6, wobei die Systemsteuerung (140) ferner dazu ausgebildet ist, eine Abweichung zwischen den Speicherzustände zu bestimmen und abhängig von der Abweichung die Steueranweisung zum Angleichen auszugeben.

8. Traktionsenergiespeichersystem nach einem der Ansprüche 1 bis 7, wobei die Speicherzustände auf Anfrage der Systemsteuerung (140) bestimmt werden.

9. Traktionsenergiespeichersystem nach Anspruch 8, wobei jede Energiespeichersteuerung (130) ferner dazu ausgebildet ist, auf die Anfrage der Systemsteuerung (140) den mindestens einen Modulzustand abzufragen.

10. Traktionsenergiespeichersystem nach Anspruch 8 oder 9, wobei die Systemsteuerung (140) ferner dazu ausgebildet ist, periodisch aus einem Ruhezustand in einen Angleichungszustand zu wechseln und im Angleichungszustand die Speicherzustände abzufragen und die Steueranweisung auszugeben.

11. Traktionsenergiespeichersystem nach einem der Ansprüche 8 bis 10, wobei jede Energiespeichersteuerung (130) ferner dazu ausgebildet ist, auf die Anfrage der Systemsteuerung aus einem Ruhezustand in einen Angleichungszustand zu wechseln und nach dem Steuern der Zellmodulsteuerungen (124) zum Angleichen der Zellzustände in einen Ruhezustand zu wechseln.

12. Traktionsenergiespeichersystem nach einem der Ansprüche 1 bis 11, wobei zumindest einer der Zellzustände, der Modulzustände, der Speicherzustände und/oder der Sollwert jeweils eine Leerlaufspannung und/oder einen Ladezustand angeben.

13. Traktionsenergiespeichersystem nach einem der Ansprüche 1 bis 12, wobei eine der Energiespeichersteuerungen (130) die Funktion der Systemsteuerung (140) ausführt.

14. Traktionsenergiespeichersystem nach Anspruch 13, wobei jeder der Energiespeicher (110) ferner eine erste Datenschnittstelle (142) und eine zweite Datenschnittstelle (144) umfasst, die jeweils im Energiespeicher mit der Energiespeichersteuerung (130) verbunden ist,
wobei bei den Energiespeichern (110-S), welche nicht die Funktion der Systemsteuerung (140) ausführen, die erste Datenschnittstelle (142) außerhalb des Energiespeichers unverbunden ist, und die zweite Datenschnittstelle (144) verbunden ist zur Ausgabe des Signals (402) an die zweite Datenschnittstelle (144) des Energiespeichers (110-M), welcher die Funktion der Systemsteuerung (140) ausführt; und
wobei bei dem Energiespeicher (110-M), welcher die Funktion der Systemsteuerung (140) ausführt, die erste Datenschnittstelle (142) außerhalb des Energiespeichers mit dem Fahrzeug verbunden ist zur Ausgabe eines Systemsignals (404), und die zweite Datenschnittstelle (144) verbunden ist zum Erhalt der Signale von den zweiten Datenschnittstellen (144) der Energiespeicher (110-S), welche nicht die Funktion der Systemsteuerung (140) ausführen.

15. Traktionsenergiespeichersystem nach einem der Ansprüche 1 bis 14, wobei jeder der Energiespeicher (110) in jeweils einem eigenen Gehäuse (112) angeordnet ist.

16. Kraftfahrzeug, insbesondere Nutzfahrzeug, das ein Traktionsenergiespeichersystem nach einem der Ansprüche 1 bis 15 umfasst.

## Claims

1. A traction energy storage system (100) for a vehicle, comprising:
multiple electrical energy stores (110),
wherein each of the energy stores comprises one or more interconnected cell modules (120) and an energy store controller (130) connected to the at least one cell module (120) for signal transmission purposes, and the at least one cell module (120) respectively comprises multiple interconnected storage cells (122) and a cell module controller (124) connected to the storage cells (122) for signal transmission purposes,
wherein each cell module controller (124) is designed to detect cell states of the storage cells connected for signal transmission purposes and to take the detected cell states as a basis for outputting a module state, and
wherein each energy store controller (130) is designed to take the at least one module state as a basis for determining a storage state; and
a system controller (140) connected to the energy store controllers for signal transmission purposes,
wherein the system controller (140) is designed to take the storage states as a basis for outputting a control instruction for aligning the cell states with the energy store controllers (130), and
wherein the energy store controllers (130) are further designed to control the cell module controllers (124) to align the cell states according to the control instruction.

2. The traction energy storage system according to Claim 1, wherein the energy store controllers (130) are further designed to control the alignment of the cell states according to the control instruction while the energy stores (110) without charge equalization are isolated from one another.

3. The traction energy storage system according to Claim 1, wherein each cell module controller (124) is designed to forward the detected cell states in the module state or to determine the module state on the basis of a minimum of the detected cell states, and/or wherein each energy store controller (130) is designed to take a minimum of the at least one module state as a basis for determining the storage state.

4. The traction energy storage system according to one of Claims 1 to 3, wherein the control instruction comprises a setpoint value for the cell state, optionally a uniform target cell voltage stipulated for all of the energy store controllers.

5. The traction energy storage system according to Claim 4, wherein the system controller (140) is further designed to determine the setpoint value on the basis of a minimum of the storage states.

6. The traction energy storage system according to Claim 4 or 5, wherein each cell module controller is further designed to discharge the storage cells connected to the respective cell module controller for signal transmission purposes until the setpoint value is reached.

7. The traction energy storage system according to one of Claims 1 to 6, wherein the system controller (140) is further designed to determine a difference between the storage states and to take the difference as a basis for outputting the control instruction for alignment.

8. The traction energy storage system according to one of Claims 1 to 7, wherein the storage states are determined at the request of the system controller (140) .

9. The traction energy storage system according to Claim 8, wherein each energy store controller (130) is further designed to query the at least one module state at the request of the system controller (140).

10. The traction energy storage system according to Claim 8 or 9, wherein the system controller (140) is further designed to periodically change from an idle state to an alignment state and, in the alignment state, to query the storage states and to output the control instruction.

11. The traction energy storage system according to one of Claims 8 to 10, wherein each energy store controller (130) is further designed to change from an idle state to an alignment state at the request of the system controller and to change to an idle state after the cell module controllers (124) are controlled to align the cell states.

12. The traction energy storage system according to one of Claims 1 to 11, wherein at least one of the cell states, the module states, the storage states and/or the setpoint value respectively indicate an open-circuit voltage and/or a state of charge.

13. The traction energy storage system according to one of Claims 1 to 12, wherein one of the energy store controllers (130) performs the function of the system controller (140).

14. The traction energy storage system according to Claim 13, wherein each of the energy stores (110) further comprises a first data interface (142) and a second data interface (144), each of which is connected in the energy store to the energy store controller (130),
wherein, in the case of the energy stores (110-S) that do not perform the function of the system controller (140), the first data interface (142) is unconnected outside the energy store, and the second data interface (144) is connected to output the signal (402) to the second data interface (144) of the energy store (110-M) that performs the function of the system controller (140); and
wherein, in the case of the energy store (110-M) that performs the function of the system controller (140), the first data interface (142) is connected to the vehicle outside the energy store to output a system signal (404), and the second data interface (144) is connected to receive the signals from the second data interfaces (144) of the energy stores (110-S) that do not perform the function of the system controller (140) .

15. The traction energy storage system according to one of Claims 1 to 14, wherein each of the energy stores (110) is arranged in a respective separate housing (112).

16. A motor vehicle, in particular commercial vehicle, that comprises a traction energy storage system according to one of Claims 1 to 15.

## Revendications

1. Système accumulateur d'énergie de traction (100) pour un véhicule, comprenant :
plusieurs accumulateurs d'énergie électrique (110),
chacun des accumulateurs d'énergie comprenant un ou plusieurs modules de cellule interconnectés (120) et une commande d'accumulateur d'énergie (130) en liaison de signalisation avec ledit au moins un module de cellule (120), et ledit au moins un module de cellule (120) comprenant respectivement plusieurs cellules d'accumulateur interconnectées (122) et une commande de module de cellule (124) en liaison de signalisation avec les cellules d'accumulateur (122),
chaque commande de module de cellule (124) étant réalisée pour détecter des états de cellule des cellules d'accumulateur en liaison de signalisation et pour délivrer un état de module sur la base des états de cellule détectés, et
chaque commande d'accumulateur d'énergie (130) étant réalisée pour déterminer un état d'accumulateur sur la base dudit au moins un état de module ; et
une commande de système (140) en liaison de signalisation avec les commandes d'accumulateur d'énergie,
la commande de système (140) étant réalisée pour délivrer une instruction de commande en fonction des états d'accumulateur pour adapter les états de cellule aux commandes d'accumulateur d'énergie (130), et
les commandes d'accumulateur d'énergie (130) étant en outre réalisées pour commander les commandes de module de cellule (124) pour adapter les états de cellule selon l'instruction de commande.

2. Système accumulateur d'énergie de traction selon la revendication 1, dans lequel les commandes d'accumulateur d'énergie (130) sont en outre réalisées pour commander l'adaptation des états de cellule selon l'instruction de commande pendant que les accumulateurs d'énergie (110) sont séparés les uns des autres sans échange de charge.

3. Système accumulateur d'énergie de traction selon la revendication 1, dans lequel chaque commande de module de cellule (124) est réalisée à l'état de module pour retransmettre des états de cellule détectés ou pour déterminer l'état de module sur la base d'un minimum des états de cellule détectés, et/ou dans lequel chaque commande d'accumulateur d'énergie (130) est réalisée pour déterminer l'état d'accumulateur sur la base d'un minimum dudit au moins un état de module.

4. Système accumulateur d'énergie de traction selon l'une quelconque des revendications 1 à 3, dans lequel l'instruction de commande comprend une valeur de consigne pour l'état de cellule, en option une tension de cellule cible uniforme et prédéfinie pour toutes les commandes d'accumulateur d'énergie.

5. Système accumulateur d'énergie de traction selon la revendication 4, dans lequel la commande de système (140) est en outre réalisée pour déterminer la valeur de consigne sur la base d'un minimum des états d'accumulateur.

6. Système accumulateur d'énergie de traction selon la revendication 4 ou 5, dans lequel chaque commande de module de cellule est en outre réalisée pour décharger les cellules d'accumulateur en liaison de signalisation avec la commande de module de cellule respective jusqu'à ce que la valeur de consigne soit atteinte.

7. Système accumulateur d'énergie de traction selon l'une quelconque des revendications 1 à 6, dans lequel la commande de système (140) est en outre réalisée pour déterminer un écart entre les états d'accumulateur et pour délivrer l'instruction de commande pour l'adaptation en fonction de l'écart.

8. Système accumulateur d'énergie de traction selon l'une quelconque des revendications 1 à 7, dans lequel les états d'accumulateur sont déterminés à la demande de la commande de système (140).

9. Système accumulateur d'énergie de traction selon la revendication 8, dans lequel chaque commande d'accumulateur d'énergie (130) est en outre réalisée pour consulter ledit au moins un état de module à la demande de la commande de système (140).

10. Système accumulateur d'énergie de traction selon la revendication 8 ou 9, dans lequel la commande de signal (140) est en outre réalisée pour passer périodiquement d'un état de repos à un état d'adaptation et pour consulter les états d'accumulateur à l'état d'adaptation et les délivrer à l'instruction de commande.

11. Système accumulateur d'énergie de traction selon l'une quelconque des revendications 8 à 10, dans lequel chaque commande d'accumulateur d'énergie (130) est en outre réalisée pour passer d'un état de repos à un état d'adaptation à la demande de la commande de système, et pour passer à un état de repos après la commande des commandes de module de cellule (124) pour l'adaptation des états de cellule.

12. Système accumulateur d'énergie de traction selon l'une quelconque des revendications 1 à 11, dans lequel au moins l'un parmi les états de cellule, les états de module, les états d'accumulateur et/ou la valeur de consigne indique respectivement une tension en circuit ouvert et/ou un état de charge.

13. Système accumulateur d'énergie de traction selon l'une quelconque des revendications 1 à 12, dans lequel l'une des commandes d'accumulateur d'énergie (130) remplit la fonction de la commande de système (140).

14. Système accumulateur d'énergie de traction selon la revendication 13, dans lequel chacun des accumulateurs d'énergie (110) comprend en outre une première interface de données (142) et une deuxième interface de données (144) qui sont respectivement reliées à la commande d'accumulateur d'énergie (130) dans l'accumulateur d'énergie,
dans lequel, pour les accumulateurs d'énergie (110-S) qui ne remplissent pas la fonction de la commande de système (140), la première interface de données (142) n'est pas reliée à l'extérieur de l'accumulateur d'énergie, et la deuxième interface de données (144) est reliée pour délivrer le signal (402) à la deuxième interface de données (144) de l'accumulateur d'énergie (110-M) qui remplit la fonction de la commande de système (140) ; et
dans lequel, pour l'accumulateur d'énergie (110-M) qui remplit la fonction de la commande de système (140), la première interface de données (142) est reliée au véhicule à l'extérieur de l'accumulateur d'énergie pour délivrer un signal de système (404), et la deuxième interface de données (144) est reliée pour obtenir les signaux des deuxièmes interfaces de données (144) des accumulateurs d'énergie (110-S) qui ne remplissent pas la fonction de la commande de système (140) .

15. Système accumulateur d'énergie de traction selon l'une quelconque des revendications 1 à 14, dans lequel chacun des accumulateurs d'énergie (110) est disposé dans son propre boîtier (112) respectivement.

16. Véhicule automobile, en particulier véhicule utilitaire qui comprend un système accumulateur d'énergie de traction selon l'une quelconque des revendications 1 à 15.
